# EUROPEAN PATENT SPECIFICATION

(11) **EP 4 456 310 B1**
(45) Date of publication and mention of the grant of the patent: **21.01.2026**
(21) Application number: 24162502.9
(22) Date of filing: 08.03.2024
(51) Int. Cl.: H01M 50/507, H01M 50/209, H01M 50/509, H01M 50/55, H01M 50/503, H01M 50/516

(54) **RECHARGEABLE BATTERY PACK**
WIEDERAUFLADBARES BATTERIEPACK
BLOC-BATTERIE RECHARGEABLE

(30) Priority: 03.04.2023 KR 20230043657
(43) Date of publication of application: 30.10.2024
(73) Proprietor: Samsung SDI Co., Ltd., Yongin-si, Gyeonggi-do 17084 (KR)
(72) Inventor: KIM, Hyun, Yongin-si, Gyeonggi-do 17084 (KR)
(74) Representative: Marks & Clerk LLP

(56) References cited:
- EP-A1- 3 624 217
- WO-A1-2022/191231
- KR-B1- 102 468 334
- US-A1- 2020 212 404
- US-A1- 2021 036 296

## Description

### BACKGROUND

### (a) Field of the Disclosure

The present disclosure relates to a rechargeable battery pack capable of simplifying a connection structure of bus bars and reducing a temperature rise of the bus bars.

### (b) Description of the Related Art

A rechargeable battery can be repeatedly charged and discharged, unlike a primary battery. Small-capacity rechargeable batteries are used in portable electronic devices such as mobile phones, notebook computers, and camcorders. Large-capacity and high-density rechargeable batteries are used for power for motor driving of hybrid vehicles and electric vehicles, or energy storage.

A rechargeable battery includes an electrode assembly for charging and discharging a current; a case for accommodating the electrode assembly and an electrolyte; and an electrode terminal connected to the electrode assembly and drawn out of the case. The electrode assembly may be formed in a jelly roll type formed by winding an electrode and a separator.

The rechargeable battery may be used as one unit battery cell, but may be used as a rechargeable battery pack in which a plurality of unit battery cells are connected in parallel or in series in order to implement a large capacity. For example, the rechargeable battery pack uses a bus bar for connecting the unit battery cells in series or in parallel, and may have a structure in which a current is drawn from one tab.

In the case of using a plurality of unit battery cells, the rechargeable battery pack should have a structure capable of effectively dissipating heat generated during charging and discharging for high output response, and a structure capable of effectively fixing the unit battery cells in response to shock and vibration.

However, in a process of electrically connecting a plurality of unit battery cells using a plurality of bus bars, there is a problem in that a temperature rise frequently occurs due to complicated connection of the bus bars.

EP3624217 relates to a battery module and battery pack. According to the abstract of this document there is provided a battery module including a plurality of battery units connected in series; at least two electrode output connecting pieces each disposed at an output end of the plurality of battery units; a plurality of bridging busbars, each connecting two battery units spaced by another battery unit or more battery units among the plurality of battery units; and an adjacent busbar connecting two adjacent battery units among the plurality of battery units. An electrical connection path is formed in the battery module by the electrode output connecting piece, the bridging busbars and the adjacent busbars. The battery module according to the present disclosure is applicable in diverse situations, and capable of improving safety performance and energy density.

US2020/212404 relates to a busbar and battery laminate. According to the abstract of this document there is provided a battery module including: a plurality of batteries stacked together; and a busbar that electrically connects the plurality of batteries with each other. The busbar has: a main body that extends along axis X along which the batteries are stacked together; and a plurality of connectors that protrude from the main body along an axis that intersects with the axis along which the batteries are stacked together, and are electrically connected with terminals of the batteries, respectively. The plurality of batteries are divided into a plurality of battery units. Each of the plurality of battery units includes at least two of the plurality of batteries. The busbar connects the at least two of the plurality of batteries of each of the battery units with each other in parallel. The busbar connects the battery units with each other in series.

WO2022/191231 relates to a power storage device. According to the abstract of this document there is provided a power storage device comprising: a power storage element; an electric component disposed on a path of a current that flows through a main circuit including the power storage element; a first conductive member having a first connecting portion electrically connected to the power storage element; a second conductive member connected to the first conductive member and electrically connected to the electric component; and an exterior body housing the power storage element, the electric component, the first conductive member, and the second conductive member. At least one of the first conductive member and the second conductive member includes: a second connecting portion which is a portion overlapping the other and is connected in contact with the other; and an extension portion extending from the second connecting portion in a direction away from the current path.

US2021/036296 relates to a battery module, vehicle provided with same, and bus bar. According to the abstract of this document there is provided a battery module including a plurality of battery cells each including an electrode terminal, and a bus bar that connects respective electrode terminals of adjacent battery cells in a state where the plurality of battery cells are stacked, wherein the bus bar includes a first bus bar having a first thickness, and a second bus bar having a second thickness larger than the first thickness, the first bus bar is connected to the respective electrode terminals of the adjacent battery cells, and the second bus bar is in non-contact with electrode terminals of the battery cells.

KR102468334 relates to a rechargeable battery module. According to the abstract of this document there is provided a secondary battery module that electrically and mechanically safely maintains the connection structure of unit cells and bus bars. According to one embodiment of the disclosure, a secondary battery module includes unit cells arranged in a first direction, a busbar holder covering the unit cells, a busbar arranged in the busbar holder to electrically connect the unit cells, a pair of end plates provided at both ends in the first direction to support an outermost unit cell, and a side plate provided at both ends in a second direction intersecting the first direction and connected to the end plates, wherein the busbar includes a first member extending in the first direction and connected to electrode terminals of the unit cells at one end, and a second member attached to the other end of the first member to increase a current-carrying area.

### SUMMARY

An embodiment of the present disclosure provides a rechargeable battery pack capable of preventing an excessive temperature rise at a connection position of bus bars by reducing a number of bus bars and simplifying an installation length.

An embodiment of the present disclosure provides a rechargeable battery pack including: a cell assembly configured to include a plurality of battery cells and having electrode terminals each including a first electrode terminal and a second electrode terminal protruding upward from the respective battery cells, a frame portion configured to accommodate the cell assembly; and a bus bar module configured to include a plurality of bus bars positioned at an upper portion of the cell assembly and electrically connecting at least two electrode terminals to each other.

The bus bar module includes: a first bus bar module configured to include a plurality of bus bars electrically connecting the electrode terminals to each other at a first side of the cell assembly; and a second bus bar module configured to include a plurality of bus bars electrically connecting the electrode terminals to each other at a second side of the cell assembly.

The battery cells are positioned in a state in which side surfaces thereof are in contact with each other along a first direction.

The battery cells include first to fourth sets of battery cells in which electrode terminals of a same polarity are positioned adjacent to each other and a pair of battery cells form a set.

The first to fourth sets of battery cells are positioned such that electrode terminals of different polarities are adjacent to each other in a state of being positioned adjacent to each other along the first direction.

The first bus bar module includes: a first bus bar positioned along a first side of the cell assembly to have a first side that is electrically connected to a first electrode terminal of the first set of battery cells and a second side that is electrically connected to a second electrode terminal of the fourth set of battery cells; and a second bus bar positioned on a side surface of the first bus bar to have a first side that is electrically connected to a second electrode terminal of the second set of battery cells and a second side that is electrically connected to a first electrode terminal of the third set of battery cells.

The second bus bar module may include: a third bus bar positioned along a second side of the cell assembly to have a first side that is electrically connected to a second electrode terminal of the first set of battery cells and a second side that is electrically connected to a first electrode terminal of the second set of battery cells; and a fourth bus bar positioned along the second side of the cell assembly to have a first side that is electrically connected to a second electrode terminal of the third set of battery cells, and a second side that extends to the outside of the cell assembly; and a fifth bus bar positioned on a side surface of the fourth bus bar to have a first side that is electrically connected to a first electrode terminal of the fourth set of battery cells, and a second side that extends to the outside of the fourth set of battery cells.

The first bus bar may include: a first body positioned at upper portions of first sides of the first to fourth sets of battery cells at first sides on the first side of the cell assembly; a first protrusion configured to protrude from a side surface of the first body at a first end, to be electrically connected to the first electrode terminal of the first set of battery cells; and a second protrusion configured to protrude from a side surface of the first body at a second end, to be electrically connected to the second electrode terminal of the fourth set of battery cells.

The first protrusion may protrude as a pair on the side surface of the first body at a first end, to be electrically connected to the first electrode terminal of the first set of battery cells.

The second protrusion may protrude as a pair on the side surface of the first body at a second end, to be electrically connected to the second electrode terminal of the fourth set of battery cells.

The second bus bar may include: a second body positioned at upper portions of the second set of battery cells and the third set of battery cells at a position spaced apart from the side surface of the first body; a third protrusion configured to protrude from a side surface of the second body, to be electrically connected to the second electrode terminal of the second set of battery cells; and a fourth protrusion configured to protrude from a side surface of the second body, to be electrically connected to the first electrode terminal of the third set of battery cells.

The third protrusion may protrude as a pair on the side surface of the second body, to be electrically connected to a second electrode terminal of the second set of battery cells.

The fourth protrusion may protrude as a pair on the side surface of the second body, to be electrically connected to the first electrode terminal of the third set of battery cells.

The third bus bar may include: a third body positioned at upper portions of the first set of battery cells and the second set of battery cells along the second side of the cell assembly; a fifth protrusion configured to protrude from a side surface of the third body, to be electrically connected to a second electrode terminal of the first set of battery cells; and a sixth protrusion configured to protrude from the side surface of the third body, to be electrically connected to the first electrode terminal of the second set of battery cells.

The fifth protrusion may protrude as a pair on the side surface of the second body, to be electrically connected to the second electrode terminal of the first set of battery cells.

The sixth protrusion may protrude as a pair on the side surface of the second body, to be electrically connected to the first electrode terminal of the third set of battery cells.

The fourth bus bar may include: a fourth body positioned at upper portions of the third set of battery cells and the fourth set of battery cells along the second side of the cell assembly; and a seventh protrusion configured to protrude from a side surface of the fourth body, to be electrically connected to the second electrode terminal of the third set of battery cells.

The fourth body may be connected to the first current collector outside the fourth set of battery cells.

The seventh protrusion may protrude as a pair on the side surface of the fourth body, to be electrically connected to the second electrode terminal of the third set of battery cells.

A portion of the fourth body may be positioned at upper portions of the fourth set of battery cells in a state in which the fourth set of battery cells are not electrically connected thereto.

The fifth bus bar may include: a fifth body spaced apart from a side surface of the fourth bus bar to be positioned at the upper portions of the fourth set of battery cells; and an eighth protrusion configured to protrude from the side surface of the fifth body to be electrically connected to the first electrode terminal of the fourth set of battery cells.

The eighth protrusion may protrude as a pair on the side surface of the fifth body, to be electrically connected to the first electrode terminal of the fourth set of battery cells.

The fifth body may be connected to the second current collector outside the fourth set of battery cells.

The cell assembly may include two cell assemblies that are installed inside the frame portion and positioned in opposite directions.

According to an embodiment of the present disclosure, the battery cells are positioned such that electrode terminals of different polarities are respectively positioned at positions adjacent to each other in a state in which they are positioned adjacent to each other along a first direction.

In the battery cells, first and second electrode terminals of different polarities respectively protrude at positions adjacent to each other in a state in which first to eighth battery cells are positioned adjacent to each other along a first direction.

The first bus bar module includes: a first parallel bus bar positioned along a first side of the cell assembly and electrically connected to an electrode terminal of each of the first battery cell, the third battery cell, the sixth battery cell, and the eighth battery cell; and a second parallel bus bar positioned on a side surface of the first parallel bus bar along the first side of the cell assembly and electrically connected to an electrode terminal of each of the second battery cell, the fourth battery cell, the fifth battery cell, and the seventh battery cell.

The second bus bar module may include: a third parallel bus bar positioned along the second side of the cell assembly and electrically connected to the electrode terminal of each of the first battery cell, the second battery cell, the third battery cell, and the fourth battery cell; a fourth parallel bus bar positioned along the second side of the cell assembly and electrically connected to the electrode terminal of each of the fifth battery cell and the seventh battery cell; and a fifth parallel bus bar positioned on a side surface of the fourth parallel bus bar along the second side of the cell assembly and electrically connected to the electrode terminal of each of the sixth battery cell and the eighth battery cell.

The first parallel bus bar may include: a first bus bar body positioned along the first side of the cell assembly and positioned at upper portions of the first to eighth battery cells at first sides; a first connector configured to protrude from a side surface of the first bus bar body, to be electrically connected to the first electrode terminal of the first battery cell; a second connector configured to protrude from the side surface of the first bus bar body, to be electrically connected to the first electrode terminal of the third battery cell; a third connector configured to protrude from the side surface of the first bus bar body, to be electrically connected to the second electrode terminal of the sixth battery cell; and a fourth connector configured to protrude from a side surface of the first bus bar body, to be electrically connected to the second electrode terminal of the eighth battery cell.

The second parallel bus bar includes: a second bus bar body positioned on the side surface of the first bus bar body along the first side of the cell assembly and positioned at upper portions of the second to seventh battery cells at first sides; a fifth connector configured to protrude from a side surface of the second bus bar body, to be electrically connected to a second electrode terminal of the second battery cell; a sixth connector configured to protrude from a side surface of the second bus bar body, to be electrically connected to a second electrode terminal of the fourth battery cell; a seventh connector configured to protrude from the side surface of the second bus bar body, to be electrically connected to a first electrode terminal of the fifth battery cell; and an eighth connector configured to protrude from a side surface of the second bus bar body, to be electrically connected to the first electrode terminal of the seventh battery cell.

The third parallel bus bar includes: a third bus bar body positioned along the second side of the cell assembly and positioned at upper portions of the first to fourth battery cells at second sides; a ninth connector configured to protrude from the side surface of the third bus bar body, to be electrically connected to a second electrode terminal of the first battery cell; a tenth connector configured to protrude from the side surface of the third bus bar body, to be electrically connected to a first electrode terminal of the second battery cell; an eleventh connector configured to protrude from the side surface of the third bus bar body, to be electrically connected to a second electrode terminal of the third battery cell; and a twelfth connector configured to protrude from a side surface of the third bus bar body, to be electrically connected to the first electrode terminal of the fourth battery cell.

The fourth parallel bus bar may include: a fourth bus bar body positioned along the second side of the cell assembly and positioned at upper portions of the fifth to eighth battery cells; a 13^{th} connector configured to protrude from the side surface of the fourth bus bar body, to be electrically connected to a second electrode terminal of the fifth battery cell; and a 14^{th} connector configured to protrude from the side surface of the fourth bus bar body, to be electrically connected to a second electrode terminal of the seventh battery cell.

The fourth bus bar body may be connected to the first current collector outside the eighth battery cell.

The fifth parallel bus bar may include: a fifth bus bar body positioned along the second side of the cell assembly and positioned at upper portions of the sixth to eighth battery cells; a 15^{th} connector configured to protrude from the side surface of the fifth bus bar body, to be electrically connected to a first electrode terminal of the sixth battery cell; and a 16^{th} connector configured to protrude from the side surface of the fifth bus bar body, to be electrically connected to a first electrode terminal of the eighth battery cell.

The fifth bus bar body may be connected to the second current collector outside the eighth battery cell.

The cell assembly may include two cell assemblies that are installed inside the frame portion and positioned in opposite directions.

At least some of the above and other features of the invention are set out in the claims.

According to an embodiment of the present disclosure, it is possible to appropriately reduce heat generation due to current flowing along the bus bar by eliminating a bus bar crossing between opposite sides of the cell assembly and reducing an installed length and number of the bus bars.

### BRIEF DESCRIPTION OF THE DRAWINGS

FIG. 1 illustrates a schematic perspective view showing a rechargeable battery pack according to a first embodiment of the present disclosure.
FIG. 2 illustrates a schematic top plan view showing a rechargeable battery pack illustrated in FIG. 1.
FIG. 3 illustrates a schematic top plan view showing a first bus bar module of the rechargeable battery pack of FIG. 1.
FIG. 4 illustrates a schematic top plan view showing a second bus bar module of the rechargeable battery pack of FIG. 1.
FIG. 5 illustrates a schematic perspective view showing a rechargeable battery pack according to a second embodiment of the present disclosure.
FIG. 6 illustrates a schematic top plan view showing the rechargeable battery pack illustrated in FIG. 5.
FIG. 7 illustrates a schematic top plan view showing a first bus bar module of the rechargeable battery pack of FIG. 5.
FIG. 8 illustrates a schematic top plan view showing a second bus bar module of the rechargeable battery pack of FIG. 5.

### DETAILED DESCRIPTION

Hereinafter, the present disclosure will be described more fully with reference to the accompanying drawings, in which embodiments of the disclosure are shown. The drawings and description are to be regarded as illustrative in nature and not restrictive. Like reference numerals designate like elements throughout the specification.

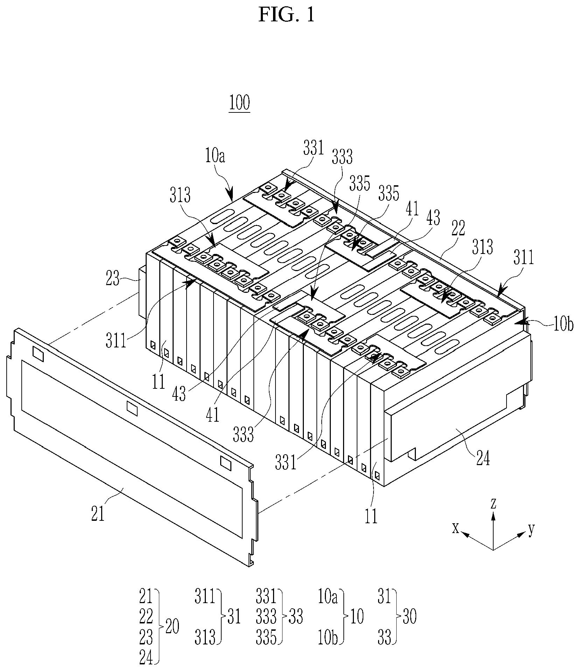

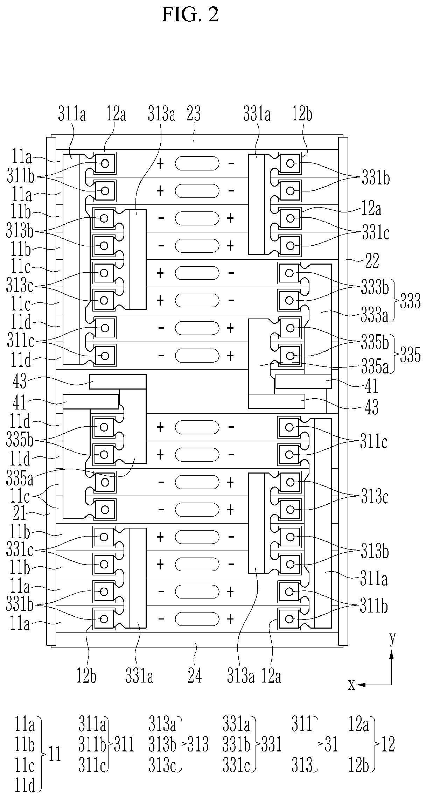

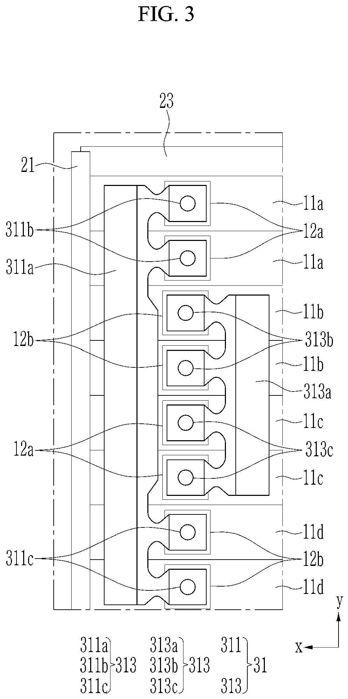

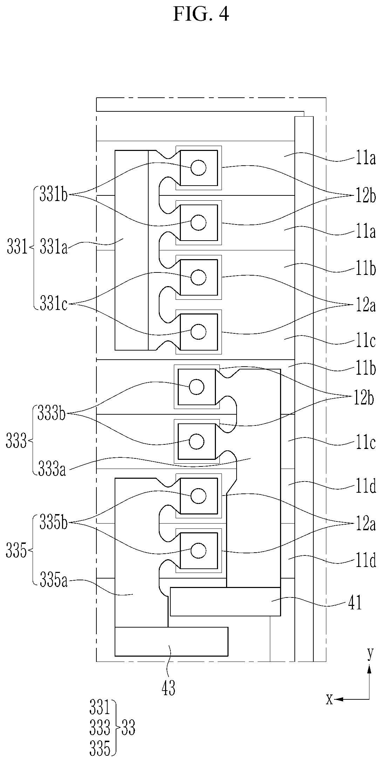

FIG. 1 illustrates a schematic perspective view showing a rechargeable battery pack according to a first embodiment of the present disclosure, FIG. 2 illustrates a schematic top plan view showing a rechargeable battery pack illustrated in FIG. 1, FIG. 3 illustrates a schematic top plan view showing a first bus bar module of the rechargeable battery pack of FIG. 1, and FIG. 4 illustrates a schematic top plan view showing a second bus bar module of the rechargeable battery pack of FIG. 1.

As illustrated in FIG. 1 to FIG. 4, the rechargeable battery pack 100 according to the first embodiment of the present disclosure includes a cell assembly 10 including a plurality of battery cells 11 and having electrode terminals 12 each including a first electrode terminal 12a and a second electrode terminal 12b protruding upward from the respective battery cells 11 and a bus bar module 30 including a plurality of bus bars positioned at an upper portion of the cell assembly 10 and electrically connecting at least two electrode terminals 12 to each other.

The battery cells 11 may be formed to include conventional rechargeable batteries that repeatedly perform charging and discharging operations. In the first embodiment, the battery cells 11 will be described by using an example in which eight battery cells 11 are electrically connected to the bus bar module 30 to form the cell assembly 10.

The battery cells 11 may be electrically connected by the bus bar module 30 in a state in which four sets are formed by forming sets every two out of eight battery cells 11.

That is, the cell assembly 10 according to the first embodiment may include first to fourth sets 11a to 11d of battery cells in which eight battery cells 11 form four sets.

In each of the first to fourth sets 11a to 11d of battery cells, a pair of battery cells 11 may be positioned in a state in which electrode terminals having the same polarity are positioned adjacent to each other.

In addition, the first to fourth sets 11a to 11d of battery cells are positioned inside a frame portion 20 with their sides adjacent to each other, and each of the first to fourth sets 11a to 11d of battery cells may be positioned in a state in which electrode terminals of different polarities are positioned adjacent to each other.

That is, an example in which the eight battery cells 11 are disposed adjacent to each other, a pair of adjacent battery cells is a first set 11a of battery cells, another pair of battery cells adjacent to the first set 11a of battery cells is a second set 11b of battery cells, another pair of battery cells adjacent to the second set 11b of battery cells is a third set 11c of battery cells, and a remaining pair of battery cells adjacent to the third set 11c of battery cells is a fourth set 11d of battery cells will be described.

As such, the first to fourth sets 11a to 11d of battery cells, in which eight battery cells are arranged in four pairs, may be electrically connected to each other by the bus bar module 30 in a state of being accommodated inside the frame portion 20.

Meanwhile, the cell assembly 10 of the rechargeable battery pack 100 according to the first embodiment may be installed inside the frame portion 20 in a state in which two cell assemblies 10a and 10b are positioned to face each other.

The cell assembly 10 may include a first cell assembly 10a inserted into the frame portion 20 and a second cell assembly 10b connected to the first cell assembly 10a. Herein, the first cell assembly 10a and the second cell assembly 10b may have a same configuration, and may be inserted into the frame portion 20 in different directions. In the following, same reference numbers are used for major components of the first cell assembly 10a and the second cell assembly 10b.

In the cell assembly 10, a first bus bar module 31 of the first cell assembly 10a and a second bus bar module 33 of the second cell assembly 10b may be positioned on a straight line at a first side of the cell assembly 10 in a state where the first cell assembly 10a and the second cell assembly 10b are inserted into the frame portion 20.

In addition, the second bus bar module 33 of the first cell assembly 10a and the first bus bar module 31 of the second cell assembly 10b may be positioned on a straight line with each other at a second side of the cell assembly 10.

The frame portion 20 include a first side frame 21 supporting first sides of the battery cells 11, a second side frame 22 supporting second sides of the battery cells 11, a first end frame 23 having opposite ends respectively connected to first ends of the first side frame 21 and the second side frame 22, and a second end frame 24 having opposite ends respectively connected to second ends of the first side frame 21 and the second side frame 22.

The first side frame 21 may be installed to support the first sides of the battery cells 11.

The second side frame 22 may be installed to support the second sides of the battery cells 11.

The first end frame 23 may be installed to connect between first ends of each of the first side frame 21 and the second side frame 22. That is, a first end of the first end frame 23 may be connected to a first end of the first side frame 21 by a fastening member, and a second end thereof may be connected to a first end of the second side frame 22 by the fastening member.

The second end frame 24 may be installed to connect between second ends of each of the first side frame 21 and the second side frame 22. That is, a first end of the second end frame 24 may be connected to a first end of the first side frame 21 by the fastening member, and a second end thereof may be connected to a second end of the second side frame 22 by the fastening member.

Meanwhile, the cell assembly 10 may be electrically connected to the battery cells 11 by the bus bar module 30 in a state of being positioned inside the frame portion 20.

The bus bar module 30 includes a first bus bar module 31 electrically connecting a plurality of battery cells at a first side of the cell assembly 10, and a second bus bar module 33 electrically connecting a plurality of battery cells at a second side of the cell assembly 10 in a state of being not directly connected to the first bus bar module 31.

The first bus bar module 31 includes a plurality of bus bars electrically connecting a plurality of electrode terminals to each other at a first side edge of the cell assembly 10.

More specifically, the first bus bar module 31 may include a first bus bar 311 and a second bus bar 313 electrically connected to electrode terminals along a first side edge of the cell assembly 10.

The first bus bar 311 and the second bus bar 313 may be positioned adjacent to the first side edge of the cell assembly 10 in a non-contact state with each other to be electrically connected to the electrode terminal 12. Hereinafter, the first electrode terminal 12a may be a positive terminal, and the second electrode terminal 12b may be a negative terminal. Of course, the first electrode terminal 12a may be changed to a negative terminal, or the second electrode terminal 12b may be changed to a positive terminal.

The first bus bar 311 may be positioned along a first side of the cell assembly 10, and may have a first side that is electrically connected to the first electrode terminal 12a of the first set 11a of battery cells, and a second side that is electrically connected to the second electrode terminal 12b of the fourth set 11d of battery cells.

The first bus bar 311 may include a first body 311a positioned at upper portions of the first to fourth sets 11a, 11b, 11c, and 11d of battery cells at first sides on a first side of the cell assembly 10, a first protrusion 311b protruding from a side surface of the first body 311a at a first end and electrically connected to the first electrode terminal 12a of the first set 11a of battery cells, and a second protrusion 311c protruding from a side surface of the first body 311a at a second side and electrically connected to the second electrode terminal 12b of the fourth set 11d of battery cell.

The first body 311a may be formed to have a long length so as to cross an upper portion of the first to fourth sets 11a to 11d of battery cells from an upper portion of a first side edge of the cell assembly 10.

The first protrusion 311b may protrude from a side surface of the first body 311a at a first end, to be electrically connected to the first electrode terminal 12a of the first set 11a of battery cells.

The first protrusion 311b may protrude as a pair on the side surface of the first body 311a at the first end and may be electrically connected to each of a pair of first electrode terminals 12a of the first set 11a of battery cells including two battery cells by welding or the like.

The second protrusion 311c may protrude from a side surface of the first body 311a at a second end, to be electrically connected to a pair of second electrode terminals 12b of the fourth set 11d of battery cells.

The second protrusion 311c may protrude as a pair on the side surface of the first body 311a at the second end and may be electrically connected to each of a pair of second electrode terminals 12b of the fourth set 11d of battery cells including two battery cells by welding or the like.

Meanwhile, the second bus bar 313 may be positioned at a first side edge of the cell assembly 10 at a position between the first protrusion 311b and the second protrusion 311c of the first bus bar 311.

More specifically, the second bus bar 313 may include a second body 313a positioned at upper portions of the second set 11b of battery cells and the third set battery cells 11c at a position spaced apart from the side surface of the first body 311a, a third protrusion 313b protruding from a side of the second body 313a at a first end and electrically connected to the second electrode terminal 12b of the second set 11b of battery cells, and a fourth protrusion 313c protruding from a side surface of the second body 313a at a second end and electrically connected to the first electrode terminal 12a of the third set 11c of battery cells.

The second body 313a may be formed to have a length equal to or similar to a width of the second set 11b of battery cells and the third set 11c of battery cells, and may be positioned at upper portions of the second set 11b of battery cells and the third set 11c of battery cells at a position spaced apart from the side surface of the first body 311a.

The third protrusion 313b may protrude from a side surface of the second body 313a at a first end, to be electrically connected to the second electrode terminals 12b of the second set 11b of battery cells.

The third protrusion 313b may protrude as a pair at a first side of the second body 313a and may be electrically connected to each of a pair of second electrode terminals 12b of the second set 11b of battery cells including two battery cells by welding or the like.

The fourth protrusion 313c may protrude from a side surface of the second body 313a to be electrically connected to the first electrode terminal 12a of the third set 11c of battery cells.

The fourth protrusion 313c may protrude as a pair on the side surface of the second body 313a and may be electrically connected to each of a pair of first electrode terminals 12a of the third set 11c of battery cells including two battery cells by welding or the like.

In the meantime, the second bus bar module 33 may be installed at a second side edge of the cell assembly 10, that is, at an edge position of the cell assembly 10 at a position opposite to a position where the first bus bar module 31 is installed, and includes a plurality of bus bars electrically connecting a plurality of electrode terminals to each other.

More specifically, the second bus bar module 33 may include a third bus bar 331, a fourth bus bar 333, and a fifth bus bar 335 electrically connected to the electrode terminal along the second side edge of the cell assembly 10.

The third bus bar 331, the fourth bus bar 333, and the fifth bus bar 335 may be positioned adjacent to the second side edge of the cell assembly 10 in a non-contact state with each other to be electrically connected to the electrode terminal 12.

The third bus bar 331 may be positioned along the a second side of the cell assembly, may have a first side that is electrically connected to the second electrode terminal 12b of the first set 11a of battery cells and a second side that is electrically connected to the first electrode terminal 12a of the second set 11b of battery cells.

The third bus bar 331 may be formed to have a same or similar shape and size as the second bus bar 313, and may be electrically connected to the electrode terminals of the first set 11a of battery cells and the second set 11b of battery cells.

More specifically, the third bus bar 331 may include a third body 331a disposed at upper portions of the first set 11a of battery cells and the second set 11b of battery cells along the second side of the cell assembly 10, a fifth protrusion 331b protruding from the side surface of the third body 331a and electrically connected to the second electrode terminal 12b of the first set 11a of battery cells, and a sixth protrusion 331c protruding from the side surface of the third body 331a and electrically connected to the first electrode terminal 12a of the second set 11b of battery cells.

The third body 331a may be formed to have a length equal to or similar to a length of a width of the first set 11a of battery cells and the second set 11b of battery cells, and may be positioned at upper portions of the first set 11a of battery cells and the second set 11b of battery cells at the second side edge of the cell assembly 10.

The fifth protrusion 331b may protrude from a side surface of the third body 331a at a first end to be electrically connected to the second electrode terminal 12b of the first set 11a of battery cells.

The fifth protrusion 331b may protrude as a pair at a first side of the third body 331a and may be electrically connected to each of a pair of secondelectrode terminals 12b of the first set 11a of battery cells including two battery cells by welding or the like.

The sixth protrusion 331c may protrude from a side surface of the third body 331a at a second end to be electrically connected to the first electrode terminal 12a of the second set 11b of battery cells.

The fourth bus bar 333 may include a fourth body 333a positioned at upper portions of the third set 11c of battery cells and the fourth set 11d of battery cells along the second side of the cell assembly 10, and a seventh protrusion 333b protruding from the side surface of the fourth body 333a and electrically connected to the second electrode terminal 12b of the third set 11c of battery cells.

The fourth bus bar 333 may be electrically connected to electrode terminals of the third set 11c of battery cells in a state of being positioned at upper portions of the third set 11c of battery cells and the fourth set 11d of battery cells while not contacting the third bus bar 331.

The third body 333a may be formed to have a length equal to or similar to a length of a width of the third set 11c of battery cells and the fourth set 11d of battery cells, and may be positioned at upper portions of the third set 11c of battery cells and the fourth set 11d of battery cells along the second side edge of the cell assembly 10.

The seventh protrusion 333b may protrude as a pair at a side surface of the fourth body 333a may be electrically connected to each of a pair of second electrode terminals 12b of the third set 11c of battery cells including two battery cells by welding or the like.

In the above-described fourth body 333a, a first current collector 41 may be connected to an end portion at which the fourth set 11d of battery cells is positioned.

As described above, the first current collector 41 is connected to the end portion of the fourth body 333a to be connected in a protruding state to the outside of the fourth set 11d of battery cells, and thus it may be installed to enable external connection for current collection and current supply.

In the meantime, the fifth bus bar 335 may be positioned on the side surface of the fourth bus bar 333, and may have a first side that is electrically connected to the first electrode terminal 12a of the fourth set 11d of battery cells and a second side that extends to the outside of the fourth set 11d of battery cells.

More specifically, the fifth bus bar 335 may include a fifth body 335a spaced apart from a side surface of the fourth bus bar 333 and positioned at an upper portion of the fourth set 11d of battery cells, and an eighth protrusion 335b that protrudes from a side surface of the fifth body 335a and is electrically connected to the first electrode terminal 12a of the fourth set 11d of battery cells.

The fifth body 335a may be formed to have a length longer than a length of the width of the fourth set 11d of battery cells, and may be installed in a state of being positioned at upper portions of the fourth set 11d of battery cells and have a first end extending to the outside of the fourth set 11d of battery cells.

The eighth protrusion 335b may protrude from a side surface of the fifth body 335a to be electrically connected to the first electrode terminal 12a of the fourth set 11d of battery cells.

The eighth protrusion 335b may protrude as a pair on the side surface of the fifth body 335a may be electrically connected to each of a pair of first electrode terminals 12a of the fourth set 11d of battery cells including two battery cells by welding or the like.

Meanwhile, a second current collector 43 may be connected to an end portion protruding from the fifth body 335a to the outside of the fourth set 11d of battery cells.

Accordingly, the second current collector 43 is connected to the end portion of the fifth body 335a to be connected in a protruding state to the outside of the fourth set 11d of battery cells, and thus it may be installed to enable external connection for current collection and current supply.

As described above, in the rechargeable battery pack 100 of the first embodiment of the present disclosure, the first bus bar module 31 and the second bus bar module 33 constituting the bus bar module 30 may be installed at a first side edge position and a second side edge position of the cell assembly 10 without crossing each other in a width direction of the cell assembly 10, to be electrically connected to electrode terminals of the battery cells.

That is, it is possible to delete a bus bar crossing between opposite sides of a conventional cell assembly.

Accordingly, a more simplified connection structure is possible in a state in which the battery cells 11 of the rechargeable battery pack 100 are connected in parallel by the bus bar module 30. Therefore, it is possible to appropriately reduce heat generated by a current flowing along the bus bars according to the simplification and reduction of the length of the bus bars.

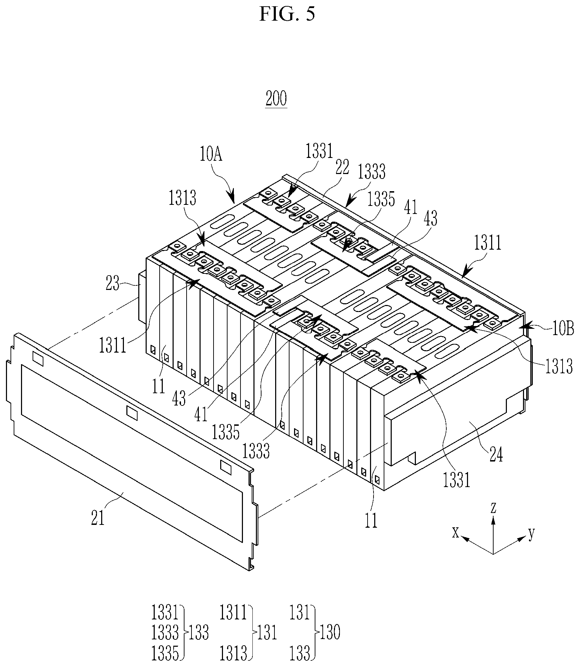

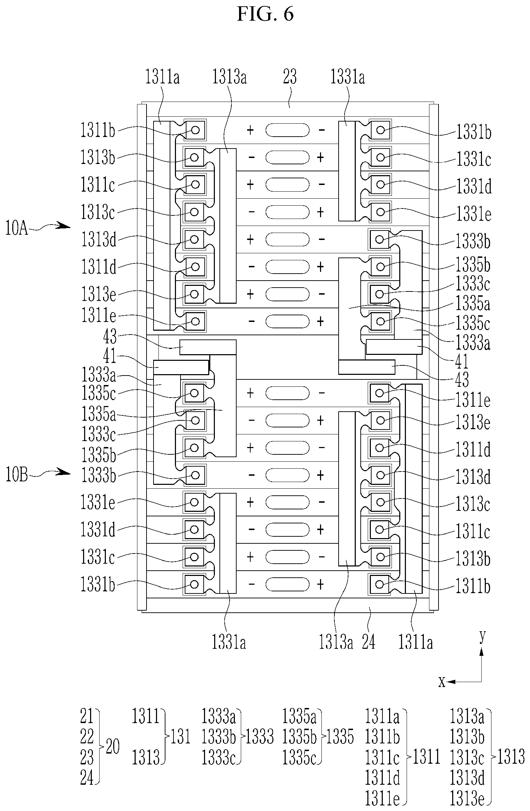

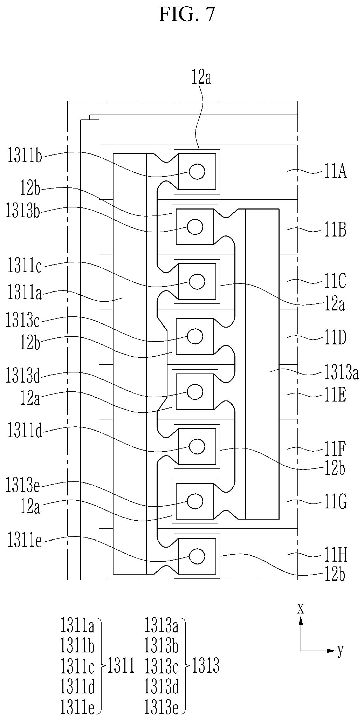

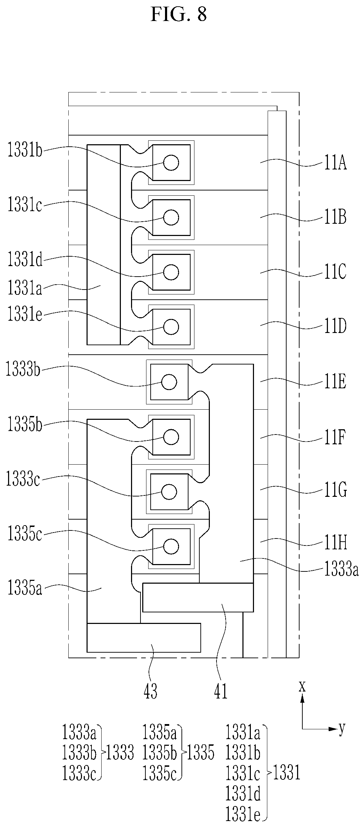

FIG. 5 illustrates a schematic perspective view showing a rechargeable battery pack according to a second embodiment of the present disclosure, FIG. 6 illustrates a schematic top plan view showing a rechargeable battery pack illustrated in FIG. 5, FIG. 7 illustrates a schematic top plan view showing a first bus bar module of the rechargeable battery pack of FIG. 5, and FIG. 8 illustrates a schematic top plan view showing a second bus bar module of the rechargeable battery pack of FIG. 5.

The same reference numerals as those of FIG. 1 to FIG. 4 denote the same or similar members having the same or similar functions. Hereinafter, detailed descriptions of the same reference numerals will be omitted.

As illustrated in FIG. 5 to FIG. 8, for the battery cells 11 according to the secondary battery pack 200 according to the second embodiment of the present disclosure, the battery cells 11 may form the cell assembly 10 by electrically connecting eight battery cells 11 to the bus bar module 30.

The battery cells 11 may be positioned such that electrode terminals of different polarities are respectively positioned at positions adjacent to each other in a state in which they are positioned adjacent to each other along a first direction.

The battery cells 11 according to the second embodiment described below may include first to eighth battery cells 11A, 11B, 11C, 11D, 11E, 11F, 11G, and 11H along the first direction, each of which may be adjacently positioned such that first and second electrode terminals having different polarities may be adjacent to each other.

That is, the battery cells 11 are formed to include ordinary rechargeable batteries that repeatedly perform charging and discharging operations, and in the second embodiment, the battery cells 11 will be described as an example in that eight battery cells are electrically connected to the bus bar module 30 to form the cell assembly 10.

Meanwhile, in the rechargeable battery pack 200 of the second embodiment, two cell assemblies 10 may be installed inside the frame portion 20 in a state in which they are positioned to face each other.

The cell assembly 10 may include a first cell assembly 10A inserted into the frame portion 20 and a second cell assembly 10B connected to the first cell assembly 10A. Herein, the first cell assembly 10A and the second cell assembly 10B may have a same configuration, and may be inserted into the frame portion 20 in different directions. Hereinafter, same reference numerals are used for main components of the first cell assembly 10A and the second cell assembly 10B.

In the cell assembly 10, a first bus bar module 131 of the first cell assembly 10A and a second bus bar module 133 of the second cell assembly 10B may be positioned on a straight line at a first side of the cell assembly 10 in a state where the first cell assembly 10A and the second cell assembly 10B are inserted into the frame portion 20.

In addition, the second bus bar module 133 of the first cell assembly 10A and the first bus bar module 131 of the second cell assembly 10B may be positioned on a straight line with each other at a second side of the cell assembly 10.

The bus bar module 130 may include a first bus bar module 131 electrically connecting a plurality of battery cells at a first side of the cell assembly 10, and a second bus bar module 133 electrically connecting a plurality of battery cells at a second side of the cell assembly 10 in a state of being not directly connected to the first bus bar module 131.

The first bus bar module 131 may include a first parallel bus bar 1311 and a second parallel bus bar 1313 electrically connected to electrode terminals along a first side of the cell assembly 10.

The first parallel bus bar 1311 and the second parallel bus bar 1313 may be positioned adjacent to the first side edge of the cell assembly 10 in a non-contact state with each other to be electrically connected to the electrode terminal 12. Hereinafter, the first electrode terminal 12a may be a positive terminal, and the second electrode terminal 12b may be a negative terminal. Of course, the first electrode terminal 12a may be changed to a negative terminal, or the second electrode terminal 12b may be changed to a positive terminal.

The first parallel bus bar 1311 may be connected to respective electrode terminals of the first battery cell 11A, the third battery cell 11C, the sixth battery cell 11F, and the eighth battery cell 11H.

The first parallel bus bar 1311 may include a first bus bar body 1311a positioned along a first side of the cell assembly 10 and positioned at upper portions of the first to eighth battery cells 11A to 11H at first sides, and a first connector 1311b, a second connector 1311c, a third connector 1311d, and a fourth connector 1311e protruding from a side surface of the first bus bar body 1311a.

The first bus bar body 1311a may be formed to have a long length so as to cross upper portions of the first to eighth battery cells 11A to 11H at an upper portion of a first side edge of the cell assembly 10.

The first connector 1311b may protrude from a side surface of the first bus bar body 1311a at a first end, to be electrically connected to the first electrode terminal 12a of the first battery cell 11A.

The first connector 1311b may protrude singly from the side surface of the first bus bar body 1311a at the first end, to be electrically connected to the first electrode terminal 12a of the first battery cell 11A by welding or the like.

The second connector 1311c may protrude from the side surface of the first bus bar body 1311a, to be electrically connected to the first electrode terminal 12a of the third battery cell 11C. The second connector 1311c may protrude singly from the side surface of the first bus bar body 1311a, to be electrically connected to the first electrode terminal 12a of the third battery cell 11C by welding or the like.

The third connector 1311d may protrude from the side surface of the first bus bar body 1311a, to be electrically connected to the second electrode terminal 12b of the sixth battery cell 11F. The third connector 1311d may protrude singly from the side surface of the first bus bar body 1311a, to be electrically connected to the second electrode terminal 12b of the sixth battery cell 11F by welding or the like.

The fourth connector 1311e may protrude from the side surface of the first bus bar body 1311a at a second end, to be electrically connected to the second electrode terminal 12b of the eighth battery cell 11H. The fourth connector 1311e may protrude singly from the side surface of the first bus bar body 1311a, to be electrically connected to the second electrode terminal 12b of the eighth battery cell 11H by welding or the like.

The second parallel bus bar 1313 may be electrically connected to respective electrode terminals of the second battery cell 11B, the fourth battery cell 11D, the fifth battery cell 11E, and the seventh battery cell 11G at a position spaced apart from the side surface of the first parallel bus bar 1311.

The second parallel bus bar 1313 may include a second bus bar body 1313a positioned at upper portions of the second to seventh battery cells 11B to 11G at first sides on the side surface of the first bus bar body 1311a along a first side of the cell assembly 10, and a fifth connector 1313b, a sixth connector 1313c, a seventh connector 1313d, and an eighth connector 1313e protruding from the side surface of the second bus bar body 1313a.

The second bus bar body 1313a may be formed to have a long length so as to cross upper portions of the second to seventh battery cells 11B to 11G at a position spaced apart from the side surface of the first bus bar body 1311a at an upper portion of a first side edge of the cell assembly 10.

The fifth connector 1313b may protrude singly from the side surface of the second bus bar body 1313a at a first end, to be electrically connected to the second electrode terminal 12b of the second battery cell 11B at a position between the first connector 1311b and the second connector 1311c by welding or the like.

The sixth connector 1313c may protrude from the side surface of the second bus bar body 1313a, to be electrically connected to the second electrode terminal 12b of the fourth battery cell 11D at a position between the second connector 1311c and the third connector 1311d.

The fifth connector 1313d may protrude from the side surface of the second bus bar body 1313a, to be electrically connected to the first electrode terminal 12a of the fifth battery cell 11E at a position between the second connector 1311c and the third connector 1311d.

The eighth connector 1313e may protrude from the side surface of the second bus bar body 1313a, to be electrically connected to the first electrode terminal 12a of the seventh battery cell 11G at a position between the third connector 1311d and the fourth connector 1311e.

In the meantime, the second bus bar module 133 may be installed at a second side edge of the cell assembly 10, that is, at an edge position of the cell assembly 10 at a position opposite to a position where the first bus bar module 131 is installed, and may include a plurality of bus bars electrically connecting a plurality of electrode terminals to each other.

More specifically, the second bus bar module 133 may include a third parallel bus bar 1331, a fourth parallel bus bar 1333, and a fifth parallel bus bar 1335 electrically connected to the electrode terminal along the second side of the cell assembly 10.

The third parallel bus bar 1331 may include a third bus bar body 1331a positioned along the second side of the cell assembly 10 and positioned at upper portions of the first to fourth battery cells 11A to 11D at second sides, and a ninth connector 1331b, a tenth connector 1331c, an eleventh connector 1331d, and a twelfth connector 1331e protruding from the side surface of the third bus bar body 1331a and electrically connected to the electrode terminal.

The third bus bar body 1331a may be formed to have a long length so as to cross upper portions of the first to fourth battery cells 11A to 11D at an upper portion of a second side edge of the cell assembly 10.

The ninth connector 1331b may protrude singly from the side surface of the third bus bar body 1331a at the first end, to be electrically connected to the second electrode terminal 12b of the first battery cell 11A by welding or the like.

The tenth connector 1331c may protrude from a side surface of the ninth connector 1331b to a side surface of the third bus bar body 1331a, to be electrically connected to the first electrode terminal 12a of the second battery cell 11B by welding or the like.

The eleventh connector 1331d may protrude from a side surface of the tenth connector 1331c to the side surface of the third bus bar body 1331a, to be electrically connected to the second electrode terminal 12b of the third battery cell 11C by welding or the like.

The twelfth connector 1331e may protrude from a side surface of the eleventh connector 1331d to the side surface of the third bus bar body 1331a, to be electrically connected to the first electrode terminal 12a of the fourth battery cell 11D by welding or the like.

In the meantime, the fourth parallel bus bar 1333 may include a fourth bus bar body 1333a positioned along the second side of the cell assembly 10 and positioned at upper portions of the fifth battery cell 11E to the eighth battery cell 11H, and a 13^{th} connector 1333b and a 14^{th} connector 1333c protruding from the side surface of the fourth bus bar body 1333a.

The fourth bus bar body 1333a may be formed to have a long length so as to cross upper portions of the fifth to eighth battery cells 11E to 11H at an upper portion of a second side edge of the cell assembly 10.

In the fourth bus bar body 1333a, the first current collector 41 may be connected to an end portion positioned at an upper portion of the eighth battery cell 11H from the outside of the eighth battery cell 11H.

The 13^{th} connector 1331b may protrude singly from the side surface of the fourth bus bar body 1333a at a first end, to be electrically connected to the second electrode terminal 12b of the fifth battery cell 11E by welding or the like.

The 14^{th} connector 1333c may protrude singly from the side surface of the fourth bus bar body 1333a, to be electrically connected to the second electrode terminal 12b of the seventh battery cell 11G by welding or the like.

In the meantime, the fifth parallel bus bar 1335 may include a fifth bus bar body 1335a positioned along the second side of the cell assembly 10 and positioned at upper portions of the sixth to eighth battery cells 11F to 11H, and a 15^{th} connector 1335b and a 16^{th} connector 1335c protruding from the side surface of the fifth bus bar body 1335a.

The fifth bus bar body 1335a may be formed to have a long length so as to cross upper portions of the sixth battery cells 11F to the eighth battery cells 11H at a position spaced apart from the side surface of the fourth bus bar body 1333a.

In the fifth bus bar body 1335a, the second current collector 43 may be connected to an end portion positioned at an upper portion of the eighth battery cell 11H from the outside of the eighth battery cell 11H.

The 15^{th} connector 1335b may protrude from the side surface of the fifth bus bar body 1335a between the 13^{th} connector 1333b and the 14^{th} connector 1333c, to be electrically connected to the first electrode terminal 12a of the sixth battery cell 11F.

The 16^{th} connector 1335c may protrude from the side surface of the fifth bus bar body 1335a, to be electrically connected to the first electrode terminal 12a of the eighth battery cell 11H.

As described above, in the rechargeable battery pack 200 of the second embodiment of the present disclosure, the first bus bar module 131 and the second bus bar module 133 constituting the bus bar module 130 may be installed at a first side edge position and a second side edge position of the cell assembly 10 without crossing each other in a width direction of the cell assembly 10, to be electrically connected to electrode terminals of the battery cells.

Accordingly, a more simplified connection structure is possible in a state in which the battery cells 11 of the rechargeable battery pack 200 are connected in parallel by the bus bar module 130. Therefore, it is possible to appropriately reduce heat generated by a current flowing along the bus bars according to the simplification and reduction of the length of the bus bars.

While this disclosure has been described in connection with what is presently considered to be practical embodiments, it is to be understood that the disclosure is not limited to the disclosed embodiments, but, on the contrary, the scope of protection is defined by the appended claims.

**<Description of Symbols>**

| | | | |
|---|---|---|---|
| 10: | cell assembly | 10a, 10A: | first cell assembly |
| 10b, 10B: | second cell assembly | 11: | battery cell |
| 11a: | first set of battery cells | 11b: | second set of battery cells |
| 11c: | third set of battery cells | 11d: | fourth set of battery cells |
| 11A: | first battery cell | 11B: | second battery cell |
| 11C: | third battery cell | 11D: | fourth battery cell |
| 11E: | fifth battery cell | 11F: | sixth battery cell |
| 11G: | seventh battery cell | 11H: | eighth battery cell |
| 20: | frame portion | 21: | first side frame |
| 22: | second side frame | 23: | first end frame |
| 24: | second end frame | 30, 130: | bus bar module |
| 31, 131: | first bus bar module | 311: | first bus bar |
| 311a: | first body | 311b: | first protrusion |
| 311c: | second protrusion | 313: | second bus bar |
| 313a: | second body | 313b: | third protrusion |
| 313c: | fourth protrusion | 33, 133: | second bus bar module |
| 331: | third bus bar | 331a: | third body |
| 331b: | fifth protrusion | 331c: | sixth protrusion |
| 333: | fourth bus bar | 333a: | fourth body |
| 333b: | seventh protrusion | 335: | fifth bus bar |
| 335a: | fifth body | 335b: | eighth protrusion |
| 41: | first current collector | 43: | second current collector |
| 1311: | first parallel bus bar | 1311a: | first bus bar body |
| 1311b: | first connector | 1311c: | second connector |
| 1311d: | third connector | 1311e: | fourth connector |
| 1313: | second parallel bus bar | 1313a: | second bus bar body |
| 1313b: | fifth connector | 1313c: | sixth connector |
| 1313d: | seventh connector | 1313e: | eighth connector |
| 1331: | third parallel bus bar | 1331a: | third bus bar body |
| 1331b: | ninth connector | 1331c: | tenth connector |
| 1331d: | eleventh connector | 1331e: | twelfth connector |
| 1333: | fourth parallel bus bar | 1333a: | fourth bus bar body |
| 1333b: | 13^{th} connector | 1333c: | 14^{th} connector |
| 1335: | fifth parallel bus bar | 1335a: | fifth bus bar body |
| 1335b: | 15^{th} connector | 1335c: | 16^{th} connector |

## Claims

1. A rechargeable battery pack comprising:
a cell assembly (10) configured to include a plurality of battery cells (11), positioned in a state in which side surfaces thereof are in contact with each other along a first direction (X axis), and having electrode terminals (12) each including a first electrode terminal (12a) and a second electrode terminal (12b) protruding upward from the respective battery cells; the battery cells including first to fourth sets of battery cells (11a, 11b, 11c, 11d) in which electrode terminals of a same polarity are positioned adjacent to each other and a pair of battery cells form a set, and the first to fourth sets of battery cells are positioned such that electrode terminals of different polarities are adjacent to each other in a state of being positioned adjacent to each other along the first direction;
a frame portion (20) configured to accommodate the cell assembly; and
a bus bar module configured to include a plurality of bus bars positioned at an upper portion of the cell assembly and electrically connecting at least two electrode terminals to each other,
wherein the bus bar module (130) includes:
a first bus bar module (31) configured to include a plurality of bus bars electrically connecting the electrode terminals to each other at a first side of the cell assembly; the first bus bar module including: i) a first bus bar (311) positioned along a first side of the cell assembly to have a first side that is electrically connected to a first electrode terminal (12a) of the first set of battery cells (11a) and a second side that is electrically connected to a second electrode terminal (12b) of the fourth set of battery cells (11d), and ii) a second bus bar (313) positioned on a side surface of the first bus bar to have a first side that is electrically connected to a second electrode terminal (12b) of the second set of battery cells (11b) and a second side that is electrically connected to a first electrode terminal (12a) of the third set of battery cells (12c); and
a second bus bar module (33) configured to include a plurality of bus bars electrically connecting the electrode terminals to each other at a second side of the cell assembly.

2. The rechargeable battery pack of claim 1, wherein
the second bus bar module (33, 133) includes:
a third bus bar (331) positioned along a second side of the cell assembly (10) to have a first side that is electrically connected to a second electrode terminal (12b) of the first set of battery cells (11a) and a second side that is electrically connected to a first electrode terminal (12b) of the second set of battery cells (11b); and
a fourth bus bar (333) positioned along the second side of the cell assembly to have a first side that is electrically connected to a second electrode terminal (12b) of the third set of battery cells (11c), and a second side that extends to the outside of the cell assembly; and
a fifth bus bar (335) positioned on a side surface of the fourth bus bar to have a first side that is electrically connected to a first electrode terminal (12a) of the fourth set of battery cells (11d), and a second side that extends to the outside of the fourth set of battery cells.

3. The rechargeable battery pack of claim 2, wherein
the first bus bar (311) includes:
a first body (311a) positioned at upper portions of first sides of the first to fourth sets of battery cells (11a, 11b, 11c, 11d) at first sides on the first side of the cell assembly (10);
a first protrusion (311b) configured to protrude from a side surface of the first body at a first end, to be electrically connected to the first electrode terminal (12a) of the first set of battery cells (11a); and
a second protrusion (311c) configured to protrude from a side surface of the first body at a second end, to be electrically connected to the second electrode terminal (12b) of the fourth set of battery cells (11d).

4. The rechargeable battery pack of claim 3, wherein
the first protrusion (311b) protrudes as a pair on the side surface of the first body (311a) at a first end, to be electrically connected to the first electrode terminal (12a) of the first set of battery cells (11a).

5. The rechargeable battery pack of claim 4, wherein
the second protrusion (311c) protrudes as a pair on the side surface of the first body (311a) at a second end, to be electrically connected to the second electrode terminal (12b) of the fourth set of battery cells (11d).

6. The rechargeable battery pack of claim 5, wherein
the second bus bar (313) includes:
a second body (313a) positioned at upper portions of the second set of battery cells (11b) and the third set of battery cells (11c) at a position spaced apart from the side surface of the first body (311a);
a third protrusion (313b) configured to protrude from a side surface of the second body, to be electrically connected to the second electrode terminal (12b) of the second set of battery cells; and
a fourth protrusion (313c) configured to protrude from a side surface of the second body, to be electrically connected to the first electrode terminal (12a) of the third set of battery cells, optionally wherein:
the third protrusion (313b) protrudes as a pair on the side surface of the second body (313a), to be electrically connected to the second electrode terminal (12b) of the second set of battery cells (11b), more optionally wherein:
the fourth protrusion (313c) protrudes as a pair on the side surface of the second body (313a), to be electrically connected to the first electrode terminal (12a) of the third set of battery cells (11c), more optionally wherein:
the third bus bar (331) includes:
a third body (331a) positioned at upper portions of the first set of battery cells (11a) and the second set of battery cells (11b) along the second side of the cell assembly (10);
a fifth protrusion (331b) configured to protrude from a side surface of the third body (331a), to be electrically connected to the second electrode terminal (12b) of the first set of battery cells (11a); and
a sixth protrusion (331c) configured to protrude from the side surface of the third body (331a), to be electrically connected to the first electrode terminal (12a) of the second set of battery cells (11b), more optionally wherein:
the fifth protrusion (331b) protrudes as a pair on the side surface of the second body (313a), to be electrically connected to the second electrode terminal (12b) of the first set of battery cells (11a), more optionally wherein:
the sixth protrusion (331c) protrudes as a pair on the side surface of the third body (331a), to be electrically connected to the first electrode terminal (12a) of the second set of battery cells (11b), more optionally wherein:
the fourth bus bar (333) includes:
a fourth body (333a) positioned at upper portions of the third set of battery cells (11c) and the fourth set of battery cells (11d) along the second side of the cell assembly (10); and
a seventh protrusion (333b) configured to protrude from a side surface of the fourth body (333a), to be electrically connected to the second electrode terminal (12b) of the third set of battery cells (11c), more optionally wherein:
the fourth body (333a) is connected to a first current collector (41) outside the fourth set of battery cells (11d), more optionally wherein:
the seventh protrusion (333b) protrudes as a pair on the side surface of the fourth body (333a), to be electrically connected to the second electrode terminal (12b) of the third set of battery cells (11c), more optionally wherein:
a portion of the fourth body (333a) is positioned at upper portions of the fourth set of battery cells (11d) in a state in which the fourth set of battery cells are not electrically connected thereto, more optionally wherein:
the fifth bus bar (335) includes:
a fifth body (335a) spaced apart from a side surface of the fourth bus bar (333)to be positioned at the upper portions of the fourth set of battery cells (11d); and
an eighth protrusion (335b) configured to protrude from the side surface of the fifth body (335a) to be electrically connected to the first electrode terminal (12a) of the fourth set of battery cells (11d), more optionally wherein:
the eighth protrusion (335b) protrudes as a pair on the side surface of the fifth body (335a), to be electrically connected to the first electrode terminal (12a) of the fourth set of battery cells (11d), more optionally wherein:
the fifth body (335a) is connected to a second current collector (43) outside the fourth set of battery cells (11d), more optionally wherein:
the cell assembly (10) includes two cell assemblies (10a, 10b; 10A, 10B) that are installed inside the frame portion (20) and positioned in opposite directions.

7. A rechargeable battery pack comprising:
a cell assembly (10) configured to include a plurality of battery cells (11), positioned such that electrode terminals of different polarities are respectively positioned at positions adjacent to each other in a state in which they are positioned adjacent to each other along a first direction (X axis), and having electrode terminals (12) each including a first electrode terminal (12a) and a second electrode terminal (12b) protruding upward from the respective battery cells, wherein first and second electrode terminals of different polarities respectively protrude at positions adjacent to each other in a state in which first to eighth battery cells (11A - 11H) are positioned adjacent to each other along a first direction (X axis);
a frame portion (20) configured to accommodate the cell assembly; and
a bus bar module configured to include a plurality of bus bars positioned at an upper portion of the cell assembly and electrically connecting at least two electrode terminals to each other,
wherein the bus bar module (130) includes:
a first bus bar module (131) configured to include a plurality of bus bars electrically connecting the electrode terminals to each other at a first side of the cell assembly, wherein the first bus bar module includes (i) a first parallel bus bar (1311) positioned along a first side of the cell assembly (10) and electrically connected to an electrode terminal of each of the first battery cell (11A), the third battery cell (11C), the sixth battery cell (11F), and the eighth battery cell (11H); and ii) a second parallel bus bar (1313) positioned on a side surface of the first parallel bus bar along the first side of the cell assembly and electrically connected to an electrode terminal of each of the second battery cell (11B), the fourth battery (11D) cell, the fifth battery cell (11E), and the seventh battery cell (11G); and
a second bus bar module configured to include a plurality of bus bars electrically connecting the electrode terminals to each other at a second side of the cell assembly.

8. The rechargeable battery pack of claim 7, wherein
the second bus bar module (133) includes:
a third parallel bus bar (1331) positioned along the second side of the cell assembly (10) and electrically connected to the electrode terminal of each of the first battery cell (11A), the second battery cell (11B), the third battery cell (11C), and the fourth battery cell (11D);
a fourth parallel bus bar (1333) positioned along the second side of the cell assembly and electrically connected to the electrode terminal of each of the fifth battery cell (11E) and the seventh battery cell (11G); and
a fifth parallel bus bar (1335) positioned on a side surface of the fourth parallel bus bar along the second side of the cell assembly and electrically connected to the electrode terminal of each of the sixth battery cell (11F) and the eighth battery cell (11H).

9. The rechargeable battery pack of claim 8, wherein
the first parallel bus bar (1311) includes:
a first bus bar body (1311a) positioned along the first side of the cell assembly and positioned at upper portions of the first to eighth battery cells (11A - 11H) at first sides;
a first connector (1311b) configured to protrude from a side surface of the first bus bar body, to be electrically connected to the first electrode terminal (12a) of the first battery cell (11A);
a second connector (1311c) configured to protrude from the side surface of the first bus bar body, to be electrically connected to the first electrode terminal (12a) of the third battery cell (11C);
a third connector (1311d) configured to protrude from the side surface of the first bus bar body, to be electrically connected to the second electrode terminal (12b) of the sixth battery cell (11F); and
a fourth connector (1311e) configured to protrude from a side surface of the first bus bar body, to be electrically connected to the second electrode terminal of the eighth battery cell.

10. The rechargeable battery pack of claim 9, wherein
the second parallel bus bar (1313) includes:
a second bus bar body (1313a) positioned on the side surface of the first bus bar body (1311a) along the first side of the cell assembly (10) and positioned at upper portions of the second to seventh battery cells (11B - 11G) at first sides;
a fifth connector (1313b) configured to protrude from a side surface of the second bus bar body, to be electrically connected to a second electrode terminal (12b) of the second battery cell (11B);
a sixth connector (1313c) configured to protrude from a side surface of the second bus bar body, to be electrically connected to a second electrode terminal (12b) of the fourth battery cell (11D);
a seventh connector (1313d) configured to protrude from the side surface of the second bus bar body, to be electrically connected to a first electrode terminal (12a) of the fifth battery cell (11F); and
an eighth connector (1313e) configured to protrude from the side surface of the second bus bar body, to be electrically connected to a first electrode terminal (12a) of the seventh battery cell (11G), optionally wherein:
the third parallel bus bar (1331) includes:
a third bus bar body (1331a) positioned along the second side of the cell assembly and positioned at upper portions of the first to fourth battery cells (11A - 11D) at second sides;
a ninth connector (1331b) configured to protrude from the side surface of the third bus bar body, to be electrically connected to a second electrode terminal (12b) of the first battery cell (11A);
a tenth connector (1331c) configured to protrude from the side surface of the third bus bar body, to be electrically connected to a first electrode terminal (12a) of the second battery cell (11B);
an eleventh connector (1331d) configured to protrude from the side surface of the third bus bar body, to be electrically connected to a second electrode terminal (12b) of the third battery cell (11C); and
a twelfth connector (1331e) configured to protrude from the side surface of the third bus bar body, to be electrically connected to a first electrode terminal (12a) of the fourth battery cell (11D), more optionally wherein:
the fourth parallel bus bar (1333) includes:
a fourth bus bar body (1333a) positioned along the second side of the cell assembly and positioned at upper portions of the fifth to eighth battery cells (11E - 11H);
a 13^{th} connector (1333b) configured to protrude from the side surface of the fourth bus bar body, to be electrically connected to a second electrode terminal (12b) of the fifth battery cell (11E); and
a 14^{th} connector (1333c) configured to protrude from the side surface of the fourth bus bar body, to be electrically connected to a second electrode terminal (12b) of the seventh battery cell (11G) , more optionally wherein:
the fourth bus bar body (1333a) is connected to a first current collector outside the eighth battery cell (11H), more optionally wherein:
the fifth parallel bus bar (1335) includes:
a fifth bus bar body (1335a) positioned along the second side of the cell assembly and positioned at upper portions of the sixth to eighth battery cells (11F - 11H);
a 15^{th} connector (1335b) configured to protrude from the side surface of the fifth bus bar body, to be electrically connected to a first electrode terminal (12a) of the sixth battery cell (11F); and
a 16^{th} connector (133fc) configured to protrude from the side surface of the fifth bus bar body, to be electrically connected to a first electrode terminal (12a) of the eighth battery cell (11H), more optionally wherein:
the fifth bus bar body (1335a) is connected to a second current collector (43) outside the eighth battery cell (11H), more optionally wherein:
the cell assembly (10) includes two cell assemblies (10a, 10b; 10A, 10B) that are installed inside the frame portion (20) and positioned in opposite directions.

## Patentansprüche

1. Aufladbares Batteriepaket, umfassend:
eine Zellenbaugruppe (10), die so konfiguriert ist, dass sie eine Vielzahl von Batteriezellen (11) einschließt, die in einem Zustand angeordnet sind, in dem Seitenflächen derselben entlang einer ersten Richtung (X-Achse) in Kontakt zueinander stehen, und die Elektrodenanschlüsse (12) aufweisen, die jeweils einen ersten Elektrodenanschluss (12a) und einen zweiten Elektrodenanschluss (12b) einschließen, die von den jeweiligen Batteriezellen nach oben vorstehen; wobei die Batteriezellen erste bis vierte Sätze von Batteriezellen (11a, 11b, 11c, 11d) einschließen, in denen Elektrodenanschlüsse einer gleichen Polarität benachbart angeordnet sind und ein Paar von Batteriezellen einen Satz bildet und die ersten bis vierten Sätze von Batteriezellen so angeordnet sind, dass Elektrodenanschlüsse unterschiedlicher Polaritäten in einem Zustand, in dem sie entlang der ersten Richtung benachbart angeordnet sind, benachbart sind;
einen Rahmenabschnitt (20), der zum Aufnehmen der Zellenbaugruppe konfiguriert ist; und
ein Sammelschienenmodul, das so konfiguriert ist, dass es eine Vielzahl von Sammelschienen einschließt, die an einem oberen Abschnitt der Zellenbaugruppe angeordnet sind und mindestens zwei Elektrodenanschlüsse elektrisch miteinander verbinden,
wobei das Sammelschienenmodul (130) Folgendes einschließt:
ein erstes Sammelschienenmodul (31), das so konfiguriert ist, dass es eine Vielzahl von Sammelschienen einschließt, welche die Elektrodenanschlüsse an einer ersten Seite der Zellenbaugruppe elektrisch miteinander verbinden; wobei das erste Sammelschienenmodul Folgendes einschließt: i) eine erste Sammelschiene (311), die entlang einer ersten Seite der Zellenbaugruppe angeordnet ist, um eine erste Seite, die elektrisch mit einem ersten Elektrodenanschluss (12a) des ersten Satzes von Batteriezellen (11a) verbunden ist, und eine zweite Seite, die elektrisch mit einem zweiten Elektrodenanschluss (12b) des vierten Satzes von Batteriezellen (11d) verbunden ist, aufzuweisen, und ii) eine zweite Sammelschiene (313), die an einer Seitenfläche der ersten Sammelschiene angeordnet ist, um eine erste Seite, die elektrisch mit einem zweiten Elektrodenanschluss (12b) des zweiten Satzes von Batteriezellen (11b) verbunden ist, und eine zweite Seite, die elektrisch mit einem ersten Elektrodenanschluss (12a) des dritten Satzes von Batteriezellen (12c) verbunden ist, aufzuweisen; und
ein zweites Sammelschienenmodul (33), das so konfiguriert ist, dass es eine Vielzahl von Sammelschienen einschließt, welche die Elektrodenanschlüsse an einer zweiten Seite der Zellenbaugruppe elektrisch miteinander verbinden.

2. Aufladbares Batteriepaket nach Anspruch 1, wobei
das zweite Sammelschienenmodul (33, 133) Folgendes einschließt:
eine dritte Sammelschiene (331), die an einer zweiten Seite der Zellenbaugruppe (10) angeordnet ist, um eine erste Seite, die elektrisch mit einem zweiten Elektrodenanschluss (12b) des ersten Satzes von Batteriezellen (11a) verbunden ist, und eine zweite Seite, die elektrisch mit einem ersten Elektrodenanschluss (12b) des zweiten Satzes von Batteriezellen (11b) verbunden ist, aufzuweisen; und
eine vierte Sammelschiene (333), die entlang der zweiten Seite der Zellenbaugruppe angeordnet ist, um eine erste Seite, die elektrisch mit einem zweiten Elektrodenanschluss (12b) des dritten Satzes von Batteriezellen (11c) verbunden ist, und eine zweite Seite, die sich zur Außenseite der Zellenbaugruppe erstreckt, aufzuweisen; und
eine fünfte Sammelschiene (335), die auf einer Seitenfläche der vierten Sammelschiene angeordnet ist, um eine erste Seite, die elektrisch mit einem ersten Elektrodenanschluss (12a) des vierten Satzes von Batteriezellen (11d) verbunden ist, und eine zweite Seite, die sich zur Außenseite des vierten Satzes von Batteriezellen erstreckt, aufzuweisen.

3. Aufladbares Batteriepaket nach Anspruch 2, wobei
die erste Sammelschiene (311) Folgendes einschließt:
einen ersten Körper (311a), der an oberen Abschnitten erster Seiten der ersten bis vierten Sätze von Batteriezellen (11a, 11b, 11c, 11d) an ersten Seiten auf der ersten Seite der Zellenbaugruppe (10) angeordnet ist;
einen ersten Vorsprung (311b), der so konfiguriert ist, dass er von einer Seitenfläche des ersten Körpers an einem ersten Ende vorsteht, um elektrisch mit dem ersten Elektrodenanschluss (12a) des ersten Satzes von Batteriezellen (11a) verbunden zu sein; und
einen zweiten Vorsprung (311c), der so konfiguriert ist, dass er von einer Seitenfläche des ersten Körpers an einem zweiten Ende vorsteht, um elektrisch mit dem zweiten Elektrodenanschluss (12b) des vierten Satzes von Batteriezellen (11d) verbunden zu sein.

4. Aufladbares Batteriepaket nach Anspruch 3, wobei
der erste Vorsprung (311b) als ein Paar an der Seitenfläche des ersten Körpers (311a) an einem ersten Ende vorsteht, um elektrisch mit dem ersten Elektrodenanschluss (12a) des ersten Satzes von Batteriezellen (11a) verbunden zu sein.

5. Aufladbares Batteriepaket nach Anspruch 4, wobei
der zweite Vorsprung (311c) als ein Paar an der Seitenfläche des ersten Körpers (311a) an einem zweiten Ende vorsteht, um elektrisch mit dem zweiten Elektrodenanschluss (12b) des vierten Satzes von Batteriezellen (11d) verbunden zu sein.

6. Aufladbares Batteriepaket nach Anspruch 5, wobei
die zweite Sammelschiene (313) Folgendes einschließt:
einen zweiten Körper (313a), der an oberen Abschnitten des zweiten Satzes von Batteriezellen (11b) und des dritten Satzes von Batteriezellen (11c) an einer Position in einem Abstand von der Seitenfläche des ersten Körpers (311a) angeordnet ist;
einen dritten Vorsprung (313b), der so konfiguriert ist, dass er von einer Seitenfläche des zweiten Körpers vorsteht, um elektrisch mit dem zweiten Elektrodenanschluss (12b) des zweiten Satzes von Batteriezellen verbunden zu sein; und
einen vierten Vorsprung (313c), der so konfiguriert ist, dass er von einer Seitenfläche des zweiten Körpers vorsteht, um elektrisch mit dem ersten Elektrodenanschluss (12a) des dritten Satzes von Batteriezellen verbunden zu sein, wobei wahlweise:
der dritte Vorsprung (313b) als ein Paar an der Seitenfläche des zweiten Körpers (313a) vorsteht, um elektrisch mit dem zweiten Elektrodenanschluss (12b) des zweiten Satzes von Batteriezellen (11b) verbunden zu sein, wobei weiter wahlweise:
der vierte Vorsprung (313c) als ein Paar an der Seitenfläche des zweiten Körpers (313a) vorsteht, um elektrisch mit dem ersten Elektrodenanschluss (12a) des dritten Satzes von Batteriezellen (11c) verbunden zu sein, wobei weiter wahlweise:
die dritte Sammelschiene (331) Folgendes einschließt:
einen dritten Körper (331a), der an oberen Abschnitten des ersten Satzes von Batteriezellen (11a) und des zweiten Satzes von Batteriezellen (11b) entlang der zweiten Seite der Zellenbaugruppe (10) angeordnet ist;
einen fünften Vorsprung (331b), der so konfiguriert ist, dass er von einer Seitenfläche des dritten Körpers (331a) vorsteht, um elektrisch mit dem zweiten Elektrodenanschluss (12b) des ersten Satzes von Batteriezellen (11a) verbunden zu sein; und
einen sechsten Vorsprung (331c), der so konfiguriert ist, dass er von der Seitenfläche des dritten Körpers (331a) vorsteht, um elektrisch mit dem ersten Elektrodenanschluss (12a) des zweiten Satzes von Batteriezellen (11b) verbunden zu sein, wobei weiter wahlweise:
der fünfte Vorsprung (331b) als ein Paar an der Seitenfläche des zweiten Körpers (313a) vorsteht, um elektrisch mit dem zweiten Elektrodenanschluss (12b) des ersten Satzes von Batteriezellen (11a) verbunden zu sein, wobei weiter wahlweise:
der sechste Vorsprung (331c) als ein Paar an der Seitenfläche des dritten Körpers (331a) vorsteht, um elektrisch mit dem ersten Elektrodenanschluss (12a) des zweiten Satzes von Batteriezellen (11b) verbunden zu sein, wobei weiter wahlweise:
die vierte Sammelschiene (333) Folgendes einschließt:
einen vierten Körper (333a), der an oberen Abschnitten des dritten Satzes von Batteriezellen (11c) und des vierten Satzes von Batteriezellen (11d) entlang der zweiten Seite der Zellenbaugruppe (10) angeordnet ist; und
einen siebten Vorsprung (333b), der so konfiguriert ist, dass er von einer Seitenfläche des vierten Körpers (333a) vorsteht, um elektrisch mit dem zweiten Elektrodenanschluss (12b) des dritten Satzes von Batteriezellen (11c) verbunden zu sein, wobei weiter wahlweise:
der vierte Körper (333a) mit einem ersten Stromabnehmer (41) außerhalb des vierten Satzes von Batteriezellen (11d) verbunden ist, wobei weiter wahlweise:
der siebte Vorsprung (333b) als ein Paar an der Seitenfläche des vierten Körpers (333a) vorsteht, um elektrisch mit dem zweiten Elektrodenanschluss (12b) des dritten Satzes von Batteriezellen (11c) verbunden zu sein, wobei weiter wahlweise:
ein Abschnitt des vierten Körpers (333a) an oberen Abschnitten des vierten Satzes von Batteriezellen (11d) in einem Zustand angeordnet ist, in dem der vierte Satz von Batteriezellen nicht elektrisch damit verbunden ist, wobei weiter wahlweise:
die fünfte Sammelschiene (335) Folgendes einschließt:
einen fünften Körper (335a), der von einer Seitenfläche der vierten Sammelschiene (333) beabstandet ist, um an den oberen Abschnitten des vierten Satzes von Batteriezellen (11d) angeordnet zu sein; und
einen achten Vorsprung (335b), der so konfiguriert ist, dass er von der Seitenfläche des fünften Körpers (335a) vorsteht, um elektrisch mit dem ersten Elektrodenanschluss (12a) des vierten Satzes von Batteriezellen (11d) verbunden zu sein, wobei weiter wahlweise:
der achte Vorsprung (335b) als ein Paar an der Seitenfläche des fünften Körpers (335a) vorsteht, um elektrisch mit dem ersten Elektrodenanschluss (12a) des vierten Satzes von Batteriezellen (11d) verbunden zu sein, wobei weiter wahlweise:
der fünfte Körper (335a) mit einem zweiten Stromabnehmer (43) außerhalb des vierten Satzes von Batteriezellen (11d) verbunden ist, wobei weiter wahlweise:
die Zellenbaugruppe (10) zwei Zellenbaugruppen (10a, 10b; 10A, 10B) einschließt, die innerhalb des Rahmenabschnitts (20) installiert und in entgegengesetzten Richtungen angeordnet sind.

7. Aufladbares Batteriepaket, umfassend:
eine Zellenbaugruppe (10), die so konfiguriert ist, dass sie eine Vielzahl von Batteriezellen (11) einschließt, die so angeordnet sind, dass Elektrodenanschlüsse unterschiedlicher Polarität jeweils an benachbarten Positionen in einem Zustand angeordnet sind, in dem sie entlang einer ersten Richtung (X-Achse) benachbart sind, und die Elektrodenanschlüsse (12) aufweisen, die jeweils einen ersten Elektrodenanschluss (12a) und einen zweiten Elektrodenanschluss (12b) einschließen, die von den jeweiligen Batteriezellen nach oben vorstehen, wobei erste und zweite Elektrodenanschlüsse unterschiedlicher Polaritäten jeweils an zueinander benachbarten Positionen in einem Zustand vorstehen, in dem die erste bis achte Batteriezelle (11A-11H) entlang einer ersten Richtung (X-Achse) zueinander benachbart angeordnet sind;
einen Rahmenabschnitt (20), der zum Aufnehmen der Zellenbaugruppe konfiguriert ist; und
ein Sammelschienenmodul, das so konfiguriert ist, dass es eine Vielzahl von Sammelschienen einschließt, die an einem oberen Abschnitt der Zellenbaugruppe angeordnet sind und mindestens zwei Elektrodenanschlüsse elektrisch miteinander verbinden,
wobei das Sammelschienenmodul (130) Folgendes einschließt:
ein erstes Sammelschienenmodul (131), das so konfiguriert ist, dass es eine Vielzahl von Sammelschienen einschließt, welche die Elektrodenanschlüsse an einer ersten Seite der Zellenbaugruppe elektrisch miteinander verbinden; wobei das erste Sammelschienenmodul Folgendes einschließt: (i) eine erste parallele Sammelschiene (1311), die entlang einer ersten Seite der Zellenbaugruppe (10) angeordnet und elektrisch mit einem Elektrodenanschluss jeder von der ersten Batteriezelle (11A), der dritten Batteriezelle (11C), der sechsten Batteriezelle (11F) und der achten Batteriezelle (11H) verbunden ist, und ii) eine zweite Sammelschiene (1313), die an einer Seitenfläche der ersten parallelen Sammelschiene entlang der ersten Seite der Zellenbaugruppe angeordnet und elektrisch mit einem Elektrodenanschluss jeder von der zweiten Batteriezelle (11B), der vierten Batteriezelle (11C), der fünften Batteriezelle (11E) und der siebten Batteriezelle (11G) verbunden ist; und
ein zweites Sammelschienenmodul, das so konfiguriert ist, dass es eine Vielzahl von Sammelschienen einschließt, welche die Elektrodenanschlüsse auf einer zweiten Seite der Zellenbaugruppe elektrisch miteinander verbinden.

8. Aufladbares Batteriepaket nach Anspruch 7, wobei
das zweite Sammelschienenmodul (133) Folgendes einschließt:
eine dritte parallele Sammelschiene (1331), die entlang der zweiten Seite der Zellenbaugruppe (10) angeordnet und elektrisch mit dem Elektrodenanschluss jeder der Folgenden verbunden ist:
der ersten Batteriezelle (11A), der zweiten Batteriezelle (11B), der dritten Batteriezelle (11C) und der vierten Batteriezelle (11D);
eine vierte parallele Sammelschiene (1333), die entlang der zweiten Seite der Zellenbaugruppe angeordnet und elektrisch mit dem Elektrodenanschluss jeder von der fünften Batteriezelle (11E) und der siebten Batteriezelle (11G) verbunden ist; und
eine fünfte parallele Sammelschiene (1335), die an einer Seitenfläche der vierten parallelen Sammelschiene entlang der zweiten Seite der Zellenbaugruppe angeordnet und elektrisch mit dem Elektrodenanschluss jeder von der sechsten Batteriezelle (11F) und der achten Batteriezelle (11H) verbunden ist.

9. Aufladbares Batteriepaket nach Anspruch 8, wobei
die erste parallele Sammelschiene (1311) Folgendes einschließt:
einen ersten Sammelschienenkörper (1311a), der entlang der ersten Seite der Zellenbaugruppe angeordnet und an oberen Abschnitten der ersten bis achten Batteriezellen (11A-11H) an ersten Seiten angeordnet ist;
einen ersten Verbinder (1311b), der so konfiguriert ist, dass er von einer Seitenfläche des ersten Sammelschienenkörpers vorsteht, um elektrisch mit dem ersten Elektrodenanschluss (12a) der ersten Batteriezelle (11A) verbunden zu sein;
einen zweiten Verbinder (1311c), der so konfiguriert ist, dass er von der Seitenfläche des ersten Sammelschienenkörpers vorsteht, um elektrisch mit dem ersten Elektrodenanschluss (12a) der dritten Batteriezelle (11C) verbunden zu sein;
einen dritten Verbinder (1311d), der so konfiguriert ist, dass er von der Seitenfläche des ersten Sammelschienenkörpers vorsteht, um elektrisch mit dem zweiten Elektrodenanschluss (12b) der sechsten Batteriezelle (11F) verbunden zu sein; und
einen vierten Anschluss (1311e), der so konfiguriert ist, dass er von einer Seitenfläche des ersten Sammelschienenkörpers vorsteht, um elektrisch mit dem zweiten Elektrodenanschluss der achten Batteriezelle verbunden zu sein.

10. Aufladbares Batteriepaket nach Anspruch 9, wobei
die zweite parallele Sammelschiene (1313) Folgendes einschließt:
einen zweiten Sammelschienenkörper (1313a), der auf der Seitenfläche des ersten Sammelschienenkörpers (1311a) entlang der ersten Seite der Zellenbaugruppe (10) angeordnet und an oberen Abschnitten der zweiten bis siebten Batteriezelle (11B - 11G) an ersten Seiten angeordnet ist;
einen fünften Verbinder (1313b), der von einer Seitenfläche des zweiten Sammelschienenkörpers vorsteht, um elektrisch mit einem zweiten Elektrodenanschluss (12b) der zweiten Batteriezelle (11B) verbunden zu sein;
einen sechsten Verbinder (1313c), der von einer Seitenfläche des zweiten Sammelschienenkörpers vorsteht, um elektrisch mit einem zweiten Elektrodenanschluss (12b) der vierten Batteriezelle (11D) verbunden zu sein;
einen siebten Verbinder (1313d), der so konfiguriert ist, dass er von der Seitenfläche des zweiten Sammelschienenkörpers vorsteht, um elektrisch mit einem ersten Elektrodenanschluss (12a) der fünften Batteriezelle (11F) verbunden zu sein; und
einen achten Verbinder (1313e), der von der Seitenfläche des zweiten Sammelschienenkörpers vorsteht, um elektrisch mit einem ersten Elektrodenanschluss (12a) der siebten Batteriezelle (11G) verbunden zu sein, wobei wahlweise:
die dritte parallele Sammelschiene (1331) Folgendes einschließt:
einen dritten Sammelschienenkörper (1331a), der entlang der zweiten Seite der Zellenbaugruppe angeordnet ist und an oberen Abschnitten der ersten bis vierten Batteriezelle (11A - 11D) an zweiten Seiten angeordnet ist;
einen neunten Verbinder (1331b), der so konfiguriert ist, dass er von der Seitenfläche des dritten Sammelschienenkörpers vorsteht, um elektrisch mit einem zweiten Elektrodenanschluss (12b) der ersten Batteriezelle (11A) verbunden zu sein;
einen zehnten Verbinder (1331c), der so konfiguriert ist, dass er von der Seitenfläche des dritten Sammelschienenkörpers vorsteht, um elektrisch mit einem ersten Elektrodenanschluss (12a) der zweiten Batteriezelle (11B) verbunden zu sein;
einen elften Verbinder (1331d), der so konfiguriert ist, dass er von der Seitenfläche des dritten Sammelschienenkörpers vorsteht, um elektrisch mit einem zweiten Elektrodenanschluss (12b) der dritten Batteriezelle (11C) verbunden zu sein; und
einen zwölften Verbinder (1331e), der so konfiguriert ist, dass er von der Seitenfläche des dritten Sammelschienenkörpers vorsteht, um elektrisch mit einem ersten Elektrodenanschluss (12a) der vierten Batteriezelle (11D) verbunden zu sein, wobei weiter wahlweise:
die vierte parallele Sammelschiene (1333) Folgendes einschließt:
einen vierten Sammelschienenkörper (1333a), der entlang der zweiten Seite der Zellenbaugruppe angeordnet und an oberen Abschnitten der fünften bis achten Batteriezelle (11E - 11H) angeordnet ist;
einen 13. Verbinder (1333b), der so konfiguriert ist, dass er von der Seitenfläche des vierten Sammelschienenkörpers vorsteht, um elektrisch mit einem zweiten Elektrodenanschluss (12b) der fünften Batteriezelle (11E) verbunden zu sein; und
einen 14. Verbinder (1333c), der so konfiguriert ist, dass er von der Seitenfläche des vierten Sammelschienenkörpers vorsteht, um elektrisch mit einem zweiten Elektrodenanschluss (12b) der siebten Batteriezelle (11G) verbunden zu sein, wobei weiter wahlweise:
der vierte Sammelschienenkörper (1333a) mit einem ersten Stromabnehmer außerhalb der achten Batteriezelle (11H) verbunden ist, wobei weiter wahlweise:
die fünfte parallele Sammelschiene (1335) Folgendes einschließt:
einen fünften Sammelschienenkörper (1335a), der entlang der zweiten Seite der Zellenbaugruppe angeordnet und an oberen Abschnitten der sechsten bis achten Batteriezellen (11F - 11H) angeordnet ist;
einen 15. Verbinder (1335b), der so konfiguriert ist, dass er von der Seitenfläche des fünften Sammelschienenkörpers vorsteht, um elektrisch mit einem ersten Elektrodenanschluss (12a) der sechsten Batteriezelle (11F) verbunden zu sein; und
einen 16. Verbinder (133fc), der so konfiguriert ist, dass er von der Seitenfläche des fünften Sammelschienenkörpers vorsteht, um elektrisch mit einem ersten Elektrodenanschluss (12a) der achten Batteriezelle (11H) verbunden zu sein, wobei weiter wahlweise:
der fünfte Sammelschienenkörper (1335a) mit einem zweiten Stromabnehmer (43) außerhalb der achten Batteriezelle (11H) verbunden ist, wobei weiter wahlweise:
die Zellenbaugruppe (10) zwei Zellenbaugruppen (10a, 10b; 10A, 10B) einschließt, die innerhalb des Rahmenabschnitts (20) installiert und in entgegengesetzten Richtungen angeordnet sind.

## Revendications

1. Bloc-batterie rechargeable comprenant :
un ensemble de cellules (10) configuré pour inclure une pluralité de cellules de batterie (11), positionnées dans un état où leurs surfaces latérales sont en contact l'une avec l'autre le long d'une première direction (axe X), et présentant des bornes d'électrode (12) incluant chacune une première borne d'électrode (12a) et une seconde borne d'électrode (12b) faisant saillie vers le haut des cellules de batterie respectives ; les cellules de batterie incluant des premier à quatrième ensembles de cellules de batterie (11a, 11b, 11c, 11d) dans lesquels les bornes d'électrode de même polarité sont positionnées l'une à côté de l'autre et une paire de cellules de batterie forme un ensemble, et les premier à quatrième ensembles de cellules de batterie sont positionnés de telle sorte que les bornes d'électrode de polarités différentes soient adjacentes l'une à l'autre dans un état où elles sont positionnées l'une à côté de l'autre le long de la première direction ;
une partie de cadre (20) configurée pour accueillir l'ensemble de cellules ; et
un module de barres omnibus configuré pour inclure une pluralité de barres omnibus positionnées dans une partie supérieure de l'ensemble de cellules et reliant électriquement au moins deux bornes d'électrode entre elles,
dans lequel le module de barres omnibus (130) inclut :
un premier module de barres omnibus (31) configuré pour inclure une pluralité de barres omnibus reliant électriquement les bornes d'électrode entre elles sur un premier côté de l'ensemble de cellules ; le premier module de barres omnibus incluant : i) une première barre omnibus (311) positionnée le long d'un premier côté de l'ensemble de cellules pour présenter un premier côté qui est électriquement connecté à une première borne d'électrode (12a) du premier ensemble de cellules de batterie (11a) et un second côté qui est électriquement connecté à une seconde borne d'électrode (12b) du quatrième ensemble de cellules de batterie (11d), et ii) une deuxième barre omnibus (313) positionnée sur une surface latérale de la première barre omnibus pour présenter un premier côté qui est électriquement connecté à une seconde borne d'électrode (12b) du deuxième ensemble de cellules de batterie (11b) et un second côté qui est électriquement connecté à une première borne d'électrode (12a) du troisième ensemble de cellules de batterie (12c) ; et
un second module de barres omnibus (33) configuré pour inclure une pluralité de barres omnibus reliant électriquement les bornes d'électrode entre elles d'un second côté de l'ensemble de cellules.

2. Bloc-batterie rechargeable selon la revendication 1, dans lequel
le second module de barres omnibus (33, 133) inclut :
une troisième barre omnibus (331) positionnée le long d'un second côté de l'ensemble de cellules (10) pour présenter un premier côté qui est électriquement connecté à une seconde borne d'électrode (12b) du premier ensemble de cellules de batterie (11a) et un second côté qui est électriquement connecté à une première borne d'électrode (12b) du deuxième ensemble de cellules de batterie (11b) ; et
une quatrième barre omnibus (333) positionnée le long du second côté de l'ensemble de cellules pour présenter un premier côté qui est connecté électriquement à une seconde borne d'électrode (12b) du troisième ensemble de cellules de batterie (11c), et un second côté qui s'étend à l'extérieur de l'ensemble de cellules ; et
une cinquième barre omnibus (335) positionnée sur une surface latérale de la quatrième barre omnibus pour présenter un premier côté qui est électriquement connecté à une première borne d'électrode (12a) du quatrième ensemble de cellules de batterie (11d), et un second côté qui s'étend à l'extérieur du quatrième ensemble de cellules de batterie.

3. Bloc-batterie rechargeable selon la revendication 2, dans lequel
la première barre omnibus (311) inclut :
un premier corps (311a) positionné dans les parties supérieures des premiers côtés des premier à quatrième ensembles de cellules de batterie (11a, 11b, 11c, 11d) sur les premiers côtés du premier côté de l'ensemble de cellules (10) ;
une première protubérance (311b) configurée pour faire saillie d'une surface latérale du premier corps à une première extrémité, pour être connectée électriquement à la première borne d'électrode (12a) du premier ensemble de cellules de batterie (11a) ; et
une deuxième protubérance (311c) configurée pour faire saillie d'une surface latérale du premier corps à une seconde extrémité, pour être connectée électriquement à la seconde borne d'électrode (12b) du quatrième ensemble de cellules de batterie (11d).

4. Bloc-batterie rechargeable selon la revendication 3, dans lequel
la première protubérance (311b) fait saillie par paire sur la surface latérale du premier corps (311a) à une première extrémité, pour être connectée électriquement à la première borne d'électrode (12a) du premier ensemble de cellules de batterie (11a).

5. Bloc-batterie rechargeable selon la revendication 4, dans lequel
la deuxième protubérance (311c) fait saillie par paire sur la surface latérale du premier corps (311a) à une seconde extrémité, pour être connectée électriquement à la seconde borne d'électrode (12b) du quatrième ensemble de cellules de batterie (11d).

6. Bloc-batterie rechargeable selon la revendication 5, dans lequel
la deuxième barre omnibus (313) inclut :
un deuxième corps (313a) positionné dans les parties supérieures du deuxième ensemble de cellules de batterie (11b) et du troisième ensemble de cellules de batterie (11c) dans une position espacée de la surface latérale du premier corps (311a) ;
une troisième protubérance (313b) configurée pour faire saillie d'une surface latérale du deuxième corps, pour être connectée électriquement à la seconde borne d'électrode (12b) du deuxième ensemble de cellules de batterie ; et
une quatrième protubérance (313c) configurée pour faire saillie d'une surface latérale du deuxième corps, pour être connectée électriquement à la première borne d'électrode (12a) du troisième ensemble de cellules de batterie, éventuellement dans lequel :
la troisième protubérance (313b) fait saillie par paire sur la surface latérale du deuxième corps (313a), pour être connectée électriquement à la seconde borne d'électrode (12b) du deuxième ensemble de cellules de batterie (11b), plus facultativement dans lequel :
la quatrième protubérance (313c) fait saillie par paire sur la surface latérale du deuxième corps (313a), pour être connectée électriquement à la première borne d'électrode (12a) du troisième ensemble de cellules de batterie (11c), plus facultativement dans lequel :
la troisième barre omnibus (331) inclut :
un troisième corps (331a) positionné dans les parties supérieures du premier ensemble de cellules de batterie (11a) et du deuxième ensemble de cellules de batterie (11b) le long du second côté de l'ensemble de cellules (10) ;
une cinquième protubérance (331b) configurée pour faire saillie d'une surface latérale du troisième corps (331a), pour être connectée électriquement à la seconde borne d'électrode (12b) du premier ensemble de cellules de batterie (11a) ; et
une sixième protubérance (331c) configurée pour faire saillie de la surface latérale du troisième corps (331a), pour être connectée électriquement à la première borne d'électrode (12a) du deuxième ensemble de cellules de batterie (11b), plus facultativement dans lequel :
la cinquième protubérance (331b) fait saillie par paire sur la surface latérale du deuxième corps (313a), pour être connectée électriquement à la seconde borne d'électrode (12b) du premier ensemble de cellules de batterie (11a), plus facultativement dans lequel :
la sixième protubérance (331c) fait saillie par paire sur la surface latérale du troisième corps (331a), pour être connectée électriquement à la première borne d'électrode (12a) du deuxième ensemble de cellules de batterie (11b), plus facultativement dans lequel :
la quatrième barre omnibus (333) inclut :
un quatrième corps (333a) positionné dans les parties supérieures du troisième ensemble de cellules de batterie (11c) et du quatrième ensemble de cellules de batterie (11d) le long du second côté de l'ensemble de cellules (10) ; et
une septième protubérance (333b) configurée pour faire saillie d'une surface latérale du quatrième corps (333a), pour être connectée électriquement à la seconde borne d'électrode (12b) du troisième ensemble de cellules de batterie (11c), plus facultativement dans lequel :
le quatrième corps (333a) est connecté à un premier collecteur de courant (41) à l'extérieur du quatrième ensemble de cellules de batterie (11d), plus facultativement dans lequel :
la septième protubérance (333b) fait saillie par paire sur la surface latérale du quatrième corps (333a), pour être connectée électriquement à la seconde borne d'électrode (12b) du troisième ensemble de cellules de batterie (11c), plus facultativement dans lequel :
une partie du quatrième corps (333a) est positionnée sur les parties supérieures du quatrième ensemble de cellules de batterie (11d) dans un état dans lequel le quatrième ensemble de cellules de batterie n'y est pas connecté électriquement, plus facultativement dans lequel :
la cinquième barre omnibus (335) inclut :
un cinquième corps (335a) espacé d'une surface latérale de la quatrième barre omnibus (333) pour être positionné dans la partie supérieure du quatrième ensemble de cellules de batterie (11d) ; et
une huitième protubérance (335b) configurée pour faire saillie de la surface latérale du cinquième corps (335a), pour être connectée électriquement à la première borne d'électrode (12a) du quatrième ensemble de cellules de batterie (11d), plus facultativement dans lequel :
la huitième protubérance (335b) fait saillie par paire sur la surface latérale du cinquième corps (335a), pour être connectée électriquement à la première borne d'électrode (12a) du quatrième ensemble de cellules de batterie (11d), plus facultativement dans lequel :
le cinquième corps (335a) est connecté à un second collecteur de courant (43) à l'extérieur du quatrième ensemble de cellules de batterie (11d), plus facultativement dans lequel :
l'ensemble de cellules (10) inclut deux ensembles de cellules (10a, 10b ; 10A, 10B) qui sont installés à l'intérieur de la partie de cadre (20) et positionnés dans des directions opposées.

7. Bloc-batterie rechargeable comprenant :
un ensemble de cellules (10) configuré pour inclure une pluralité de cellules de batterie (11), positionnées de telle sorte que les bornes d'électrode de polarités différentes soient respectivement positionnées dans des positions adjacentes l'une à l'autre dans un état dans lequel elles sont positionnées à côté l'une de l'autre le long d'une première direction (axe X), et présentant des bornes d'électrode (12) incluant chacune une première borne d'électrode (12a) et une seconde borne d'électrode (12b) faisant saillie vers le haut à partir des cellules de batterie respectives, dans lequel les première et seconde bornes d'électrode de polarités différentes font saillie respectivement à des positions adjacentes l'une à l'autre dans un état dans lequel des première à huitième cellules de batterie (11A-11H) sont positionnées à côté l'une de l'autre le long d'une première direction (axe X) ;
une partie de cadre (20) configurée pour accueillir l'ensemble de cellules ; et
un module de barres omnibus configuré pour inclure une pluralité de barres omnibus positionnées dans une partie supérieure de l'ensemble de cellules et reliant électriquement au moins deux bornes d'électrode entre elles,
dans lequel le module de barres omnibus (130) inclut :
un premier module de barres omnibus (131) configuré pour inclure une pluralité de barres omnibus reliant électriquement les bornes d'électrode entre elles sur un premier côté de l'ensemble de cellules, dans lequel le premier module de barres omnibus inclut (i) une première barre omnibus parallèle (1311) positionnée le long d'un premier côté de l'ensemble de cellules (10) et connectée électriquement à une borne d'électrode de chacune de la première cellule de batterie (11A), de la troisième cellule de batterie (11C), de la sixième cellule de batterie (11F) et de la huitième cellule de batterie (11H) ; et ii) une deuxième barre omnibus parallèle (1313) positionnée sur une surface latérale de la première barre omnibus parallèle, le long du premier côté de l'ensemble de cellules, et connectée électriquement à une borne d'électrode de chacune de la deuxième cellule de batterie (11B), de la quatrième cellule de batterie (11D), de la cinquième cellule de batterie (11E) et de la septième cellule de batterie (11G) ; et
un second module de barres omnibus configuré pour inclure une pluralité de barres omnibus reliant électriquement les bornes d'électrode entre elles d'un second côté de l'ensemble de cellules.

8. Bloc-batterie rechargeable selon la revendication 7, dans lequel
le second module de barres omnibus (133) inclut :
une troisième barre omnibus parallèle (1331) positionnée le long du second côté de l'ensemble de cellules (10) et connectée électriquement à la borne d'électrode de chacune de la
première cellule de batterie (11A), de la deuxième cellule de batterie (11B), de la troisième cellule de batterie (11C) et de la quatrième cellule de batterie (11D) ;
une quatrième barre omnibus parallèle (1333) positionnée le long du second côté de l'ensemble de cellules et connectée électriquement à la borne d'électrode de chacune de la cinquième cellule de batterie (11E) et de la septième cellule de batterie (11G) ; et
une cinquième barre omnibus parallèle (1335) positionnée sur une surface latérale de la quatrième barre omnibus parallèle le long du second côté de l'ensemble de cellules et connectée électriquement à la borne d'électrode de chacune de la sixième cellule de batterie (11F) et de la huitième cellule de batterie (11H).

9. Bloc-batterie rechargeable selon la revendication 8, dans lequel
la première barre omnibus parallèle (1311) inclut :
un premier corps de barre omnibus (1311a) positionné le long du premier côté de l'ensemble de cellules et positionné dans les parties supérieures des première à huitième cellules de batterie (11A-11H) sur les premiers côtés ;
un premier connecteur (1311b) configuré pour faire saillie d'une surface latérale du premier corps de barre omnibus, pour être connecté électriquement à la première borne d'électrode (12a) de la première cellule de batterie (11A) ;
un deuxième connecteur (1311c) configuré pour faire saillie de la surface latérale du premier corps de barre omnibus, pour être connecté électriquement à la première borne d'électrode (12a) de la troisième cellule de batterie (11C) ;
un troisième connecteur (1311d) configuré pour faire saillie de la surface latérale du premier corps de barre omnibus, pour être connecté électriquement à la seconde borne d'électrode (12b) de la sixième cellule de batterie (11F) ; et
un quatrième connecteur (1311e) configuré pour faire saillie d'une surface latérale du premier corps de barre omnibus, pour être connecté électriquement à la seconde borne d'électrode de la huitième cellule de batterie.

10. Bloc-batterie rechargeable selon la revendication 9, dans lequel
la deuxième barre omnibus parallèle (1313) inclut :
un deuxième corps de barre omnibus (1313a) positionné sur la surface latérale du premier corps de barre omnibus (1311a) le long du premier côté de l'ensemble de cellules (10) et positionné dans les parties supérieures des deuxième à septième cellules de batterie (11B-11G) sur les premiers côtés ;
un cinquième connecteur (1313b) configuré pour faire saillie d'une surface latérale du deuxième corps de barre omnibus, pour être connecté électriquement à une seconde borne d'électrode (12b) de la deuxième cellule de batterie (11B) ;
un sixième connecteur (1313c) configuré pour faire saillie d'une surface latérale du deuxième corps de barre omnibus, pour être connecté électriquement à une seconde borne d'électrode (12b) de la quatrième cellule de batterie (11D) ;
un septième connecteur (1313d) configuré pour faire saillie de la surface latérale du deuxième corps de barre omnibus, pour être connecté électriquement à une première borne d'électrode (12a) de la cinquième cellule de batterie (11F) ; et
un huitième connecteur (1313e) configuré pour faire saillie de la surface latérale du deuxième corps de barre omnibus, pour être connecté électriquement à une première borne d'électrode (12a) de la septième cellule de batterie (11G), facultativement dans lequel :
la troisième barre omnibus parallèle (1331) inclut :
un troisième corps de barre omnibus (1331a) positionné le long du second côté de l'ensemble de cellules et positionné dans les parties supérieures des première à quatrième cellules de batterie (11A-11D) sur les seconds côtés ;
un neuvième connecteur (1331b) configuré pour faire saillie de la surface latérale du troisième corps de barre omnibus, pour être connecté électriquement à une seconde borne d'électrode (12b) de la première cellule de batterie (11A) ;
un dixième connecteur (1331c) configuré pour faire saillie de la surface latérale du troisième corps de barre omnibus, pour être connecté électriquement à une première borne d'électrode (12a) de la deuxième cellule de batterie (11B) ;
un onzième connecteur (1331d) configuré pour faire saillie de la surface latérale du troisième corps de barre omnibus, pour être connecté électriquement à une seconde borne d'électrode (12b) de la troisième cellule de batterie (11C) ; et
un douzième connecteur (1331e) configuré pour faire saillie de la surface latérale du troisième corps de barre omnibus, pour être connecté électriquement à une première borne d'électrode (12a) de la quatrième cellule de batterie (11D), plus facultativement dans lequel :
la quatrième barre omnibus parallèle (1333) inclut :
un quatrième corps de barre omnibus (1333a) positionné le long du second côté de l'ensemble de cellules et positionné dans les parties supérieures des cinquième à huitième cellules de batterie (11E-11H) ;
un 13^{e} connecteur (1333b) configuré pour faire saillie de la surface latérale du quatrième corps de barre omnibus, pour être connecté électriquement à une seconde borne d'électrode (12b) de la cinquième cellule de batterie (11E) ; et
un 14^{e} connecteur (1333c) configuré pour faire saillie de la surface latérale du quatrième corps de barre omnibus, pour être connecté électriquement à une seconde borne d'électrode (12b) de la septième cellule de batterie (11G), plus facultativement dans lequel :
le quatrième corps de barre omnibus (1333a) est connecté à un premier collecteur de courant à l'extérieur de la huitième cellule de batterie (11H), plus facultativement dans lequel :
la cinquième barre omnibus parallèle (1335) inclut :
un cinquième corps de barre omnibus (1335a) positionné le long du second côté de l'ensemble de cellules et positionné dans les parties supérieures des sixième à huitième cellules de batterie (11F-11H) ;
un 15^{e} connecteur (1335b) configuré pour faire saillie de la surface latérale du cinquième corps de barre omnibus, pour être connecté électriquement à une première borne d'électrode (12a) de la sixième cellule de batterie (11F) ; et
un 16^{e} connecteur (133fc) configuré pour faire saillie de la surface latérale du cinquième corps de barre omnibus, pour être connecté électriquement à une première borne d'électrode (12a) de la huitième cellule de batterie (11H), plus facultativement dans lequel :
le cinquième corps de barre omnibus (1335a) est connecté à un second collecteur de courant (43) à l'extérieur de la huitième cellule de batterie (11H), plus facultativement dans lequel :
l'ensemble de cellules (10) inclut deux ensembles de cellules (10a, 10b ; 10A, 10B) qui sont installés à l'intérieur de la partie de cadre (20) et positionnés dans des directions opposées.
